(19) Europäisches Patentamt / European Patent Office / Office européen des brevets

(11) **EP 4 483 428 B1**

(12) **EUROPEAN PATENT SPECIFICATION**

(45) Date of publication and mention
of the grant of the patent:
**12.02.2025 Bulletin 2025/07**

(21) Application number: **23735696.9**

(22) Date of filing: **27.06.2023**

(51) International Patent Classification (IPC):
$H01M\ 4/13^{(2010.01)}$    $H01M\ 4/505^{(2010.01)}$
$H01M\ 4/525^{(2010.01)}$    $H01M\ 4/62^{(2006.01)}$
$H01M\ 4/66^{(2006.01)}$    $H01M\ 10/052^{(2010.01)}$
$H01M\ 10/054^{(2010.01)}$

(52) Cooperative Patent Classification (CPC):
H01M 4/13; H01M 4/505; H01M 4/525; H01M 4/62;
H01M 4/621; H01M 4/623; H01M 4/625;
H01M 4/661; H01M 10/052; H01M 10/054;
Y02E 60/10

(86) International application number:
**PCT/EP2023/067416**

(87) International publication number:
**WO 2024/003023 (04.01.2024 Gazette 2024/01)**

(54) **NOVEL ANODE ACTIVE MATERIAL SLURRY FOR COATING AN ANODE CURRENT COLLECTOR FOR A SECONDARY LI-ION BATTERY**

NEUE ANODEN-AKTIVMATERIALAUFSCHLÄMMUNG ZUR BESCHICHTUNG EINES ANODISCHEN STROMSAMMLERS FÜR EINE LITHIUM-SEKUNDÄRBATTERIE

NOUVELLE MATIÈRE ACTIVE ANODE BOUE POUR LE REVÊTEMENT D'UN COLLECTEUR DE COURANT ANODE POUR UNE BATTERIE SECONDAIRE LI-ION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **27.06.2022 PCT/EP2022/067575**

(43) Date of publication of application:
**01.01.2025 Bulletin 2025/01**

(73) Proprietor: **Trinseo Europe GmbH
8808 Pfaeffikon (CH)**

(72) Inventor: **PAGE, Christian
8834 Schindellegi (CH)**

(74) Representative: **Koelliker, Robert
Patentanwalt Koelliker GmbH
Bahnhofstrasse 11
6210 Sursee (CH)**

(56) References cited:
EP-A1- 3 761 404      WO-A1-2004/091017
KR-A- 20220 054 212

**Description**

The present invention relates to an anode active material slurry for coating an anode current collector for a secondary Li-ion battery, the anode for the secondary Li-ion battery, a process to make the anode as well as the use of the anode active material slurry.

Rechargeable Li-ion batteries, also called Li-ion accumulators, secondary Li-ion batteries, and in short just Li-ion batteries, have obtained in recent times increased relevance and have become essential parts in many smaller and larger devices of modern life and beyond. Li-ion batteries are - among others - lighter, smaller, recharge faster and have a higher specific energy than conventional lead-acid batteries. Non-limiting devices and uses of today's rechargeable Li-ion batteries include smartwatches and smartphones, laptops, electric vehicles, including cars and electrical bikes, emergency power backup systems, reliable and lightweight marine performance systems, solar power storage devices, surveillance or alarm systems in remote locations, and external portable power packs.

Li-ion batteries are composed of one or more power-generating compartments called cells. Each cell is composed of a negative electrode, i.e., anode, a positive electrode, i.e., cathode, a separator, and an electrolyte.

The anode and cathode are separated by a separator, which keeps the two electrodes apart to prevent an electrical short circuit, while also allowing the movement of lithium ions between the anode and the cathode, during charge and discharge. The separator has for that reason a porous microstructure, a good mechanical strength, and an excellent chemical resistance to the electrolyte.

The electrolyte of Li-ion batteries comprises typically lithium salts, e.g., $LiPF_6$, dissolved in organic liquid solvents, e.g., ethylene carbonate and dimethyl carbonate. During discharge of the Li-ion battery, the Li-ions of the electrolyte move from the negative electrode, i.e., anode, through the solvent of the electrolyte to the positive electrode, i.e., cathode, and back when charging.

Each of the electrodes comprise a current collector, which may be a thin metal film, onto which an active material layer adheres - either on one or both sides of the current collector. The active material layer of the anode comprises typically graphite, a thickener and a binder, and the active material layer of the cathode comprises typically a Li-metal oxide, having the general structure of $LiMO_2$, wherein M stands for one or more transition metals, and a binder, such as polyvinylidene fluoride (PVDF).

The active material, which forms the active material layer of the anode, i.e., the anode active material, is most typically applied onto the anode current collector by coating and in the form of an anode active material slurry, followed by drying. The thickener provides the slurry an appropriate viscosity to allow optimal coating of the current collector by the slurry. Furthermore, it aids dispersibility of the slurry. A widely used slurry thickener is carboxymethyl cellulose (CMC). However, carboxymethyl cellulose is - when dried - brittle, and, when used in a high energy electrode having high active material content such as in Li-ion batteries, the electrode adhesion, i.e., the adhesion of the anode active material on the current collector, may be deteriorated. In addition, during electrode slitting, high adhesion is of particular importance, since otherwise delamination of the electrode may occur.

In order to overcome these disadvantages, US-A-2021/0151760 and US-A-2021/0384512 propose a hydrophobically modified alkali-swellable emulsion (HASE) instead of carboxymethyl cellulose. The hydrophobic group of the HASE is reported to be an alkyl group of 5 to 20 carbon atoms and 6 to 30, respectively. The stability of the obtained slurry composition was reported to be excellent, while the electrode adhesiveness increased and the electrode delamination was lower, when compared with CMC. While many advantages were reported when HASE thickeners were used, the latter are known to be very formulation dependent due to the complex interactions they are undergoing with the other formulation ingredients. Furthermore, they require a pH of about 8 or higher in order to develop their thickening behavior. However, in many cases a pH of about 7 or lower is sought due to potential undesired interactions at alkaline pH.

And KR-A-2022/0054212 relates to a negative electrode mixture including a binder composition, which replaces the styrene-butadiene latex binder and the carboxymethyl cellulose (CMC) by a new composition comprising a copolymer based on acrylamide, acrylic acid and acrylonitrile, and an alkali-swellable emulsion being modified with hydrophobic functional groups (HASE), wherein the hydrophobic group is an aliphatic group having 5 or more carbon atoms. This combination is reported to ensure high initial adhesion force of the negative electrode, reduce detachment area during negative electrode slitting, lower initial resistance of the negative electrode, and ultimately improve life of the secondary battery. Hence, the negative electrode mixture including styrene-butadiene latex binder and CMC can be replaced. However, the drawbacks of HASE thickeners remain and are not resolved.

Thus, the problem of the present invention is to provide an alternative thickener to carboxymethyl cellulose and HASE thickeners, which in addition possesses robust properties with regard to individual formulations and no or at least reduced pH-restrictions upon use, i.e., a thickener which is not or only slightly dependent on specific formulations. Furthermore, said thickener shall further increase the adhesion of the active material layer to the current collector, if possible. Increased adhesion would allow easier and neat electrode slitting as well as higher coating speed during the making of the battery. Furthermore, increased adhesion prolongs the lifetime of the battery.

Surprisingly, it was found that the problem can be solved with an anode active material slurry (1) for coating an anode current collector (2) for a secondary Li-ion battery (3), wherein the slurry (1) comprises

i) 80 to 98 wt.% of at least one anode active material (4);
ii) 0 to 5 wt.% of at least one conductive material (5);
iii) 0.1 to 5 wt.% of at least one alkali-swellable emulsion (6);
iv) 0 to 5 wt.% of at least one latex binder (7);
v) 0 to 5 wt.% of at least one further component (8) selected from the group of dispersants, waterborne crosslinking agents, filler, proteins, polysaccharides, and their derivatives, and synthetic water-soluble polymers, and
vi) at least one solvent (9), in particular water,

wherein the wt.% are based on their solids content in relation to the solids content of the total slurry (1), determined according to ASTM D3926-05(2019),
characterized in that the at least one alkali-swellable emulsion (6) is an emulsion- or suspension copolymerizate of at least one nonionic monomer (6a) comprising butadiene, styrene or at least one (meth)acrylate monomer, and optionally acrylonitrile, and at least one olefinically unsaturated carboxylic acid or olefinically unsaturated carboxylic acid salt (6b), wherein the (meth)acrylate monomer is a $C_1$- to $C_4$- alkyl (meth)acrylate monomer.

Thus, the alkali-swellable emulsion (6) is not hydrophobically modified and thus comprises, based on the total amount of added monomers, less than 0.2 wt.%, preferably less than 0.1 wt.%, and in particular no, i.e., 0 wt.%, monomers having a $C_5$- to $C_{40}$-alkyl-group.

Claimed also is the anode (10) for the secondary Li-ion battery (3), wherein the anode (10) comprises an anode active material layer (1*) coated on the anode current collector (2), wherein the anode active material layer (1*) is the anode active material slurry (1) according to the invention when applied onto the anode current collector (2) and dried.

Furthermore, claimed is also the process to make the anode (10) for the secondary Li-ion battery (3) by coating the anode current collector (2) with the anode active material slurry (1) according to the invention, wherein

a) the at least one anode active material (4), optional at least one conductive material, the at least one alkali-swellable emulsion (6), the optional at least one latex binder (7) and the optional at least one further component (8) are mixed, optionally upon addition of solvent (9), to obtain the anode active material slurry (1);
b) optionally adjusting the pH, solids and/or viscosity of the slurry (1) by adding a base, an acid, one or more solvents (9), and/or a thickening agent, wherein the thickening agent is different from the at least one alkali-swellable emulsion (6);
c) applying the resulting anode active material slurry (1) on one or both sides of the anode current collector (2);
d) subjecting the applied anode active material slurry (1) to a first dry step to result in the anode active material layer (1*) coated on the anode current collector (2);
e) optionally subjecting the anode active material layer (1*) coated on the anode current collector (2) to at least one further drying step; and
f) wherein the anode active material layer (1*) coated on the anode current collector (2) is optionally calendered after the final drying step, to result in a density of the anode active material layer (1*) of between 1 g/cm$^3$ to 2 g/cm$^3$, determined by dividing the weight of the coated anode active material layer (1*) by its volume, determined by multiplying its thickness, measured according to DIN 862 / Form A1 using a micrometer, with the covered area.

In addition, claimed is also the use of the anode active material slurry (1) according to the invention for coating the anode current collector (2) to obtain the anode (10) for Li-ion batteries (3) according to the process of the invention.

The anode active material slurry (1), the anode (10), the processes to make the inventive anode (10) and the use of the anode active material slurry (1) according to the invention exhibit numerous advantages. Upon adding at least one, alkali-swellable emulsion (6), i.e., ASE (6), which is not hydrophobically modified, the content of carboxymethyl cellulose (CMC) - and thus its drawbacks - can be significantly reduced or even completely omitted. In addition, it was unexpected and very surprisingly found that the adhesion force of the anode active material layer (1*), determined with the 90° peel test according to DIN EN 28510-1 :2014-07, comprising 96 wt.% graphite, 1 wt.% carbon black, 2 wt.% latex binder and 1 wt.% thickener, coated on the anode current collector (2) of the anode (10), increased from about 12.5 N/m with CMC as thickener to about 42.5 N/m with ASE (6) as thickener. It was particularly surprising to see that, when the latter is used, the peel test resulted in a clear adhesion failure without delamination was obtained. However, when CMC was used as thickener, distinct lower adhesion forces resulted and delamination of the anode material layer (1*) was observed. Hence, the adhesion force, i.e., the 90° peel adhesion force, is increased by a factor of up to 3 and more - despite the low amount of only 1 wt.% thickener, based on their solids content in relation to the solids content of the total slurry (1), in the anode active material slurry (1), and thus the anode active material layer (1*), respectively. And, when compared to hydrophobically modified alkali-swellable emulsion thickeners (HASE), alkali-swellable emulsion thickeners (ASE; 6) according to the invention provide good shear thinning properties. In addition, they are easy to formulate with. As such, they provide in formulations robust properties, and react less sensitive upon minor changes in the formulation. Furthermore, alkali-swellable emulsion thickeners (ASE; 6) can be used also at acidic pH and may - but do not require - an alkaline pH environment. Since HASE thickeners, which are typically associative thickeners due to their hydrophilic spacer group, and their terminal hydrophobic group., are reported to provide good dispersibility and improved adhesion, the skilled person would not be tempted to employ ASE thickeners instead of HASE thickeners. Said hydrophobic groups are known to contain, e.g., a $C_5$- to $C_{40}$- hydrophobe, such as a $C_5$- to $C_{40}$-alkyl-group, provide hydrodynamic interactions with hydrophobic particles of the slurry and other HASE macromolecules. Hence, the term "hydrophobically modified" refers to hydrophobic side groups, not to the backbone of the copolymers of the HASE thickener.

It is noted that it was highly surprising to see that a slurry (1) comprising the non-hydrophobically modified ASE (6), which is according to the invention, provides distinct higher adhesion, i.e., 90° peel adhesion, to the anode current collector (2), when compared to a same slurry comprising a HASE instead of ASE (6) thickener. It is believed that the presence of hydrophobic groups of HASE increase hydrophobicity of the anode active material layer (1*), which has an adverse effect to the adhesion to the anode current collector (2). With other words: The absence of hydrophobic groups in ASE (6) increases hydrophilicity of the anode active material layer (1 *), which has a positive effect on adhesion to the anode current collector (2).


The anode active material slurry (1)


Anode active material slurries to coat anode current collectors differ significantly from cathode active material slurries to coat cathode current collectors. Thus, active materials for anodes - and teachings around them - cannot be employed to active materials for cathodes - and vice versa.

The anode active material slurry (1) of the present invention is designed and is particular suitable for coating an anode current collector (2) for a secondary, i.e., rechargeable, Li-ion battery (3), also called Li-ion accumulator, in short just Li-ion battery. As such, the slurry (1) is not suitable for electrodeposition, since the major component of the slurry (1) is the anode active material (4), which is most typically non-ionic. Thus, its capability for electrodeposition is, if at all, low, and would lead to an insufficient deposition and/or to a heterogeneous deposition.

The slurry (1) comprises

i) 80 to 98 wt.%, preferably 90 to 98 wt.%, of at least one anode active material (4);
ii) 0 to 5 wt.%, preferably 1 to 4 wt.%, of at least one conductive material (5);
iii) 0.1 to 5 wt.%, preferably 0.2 to 4 wt.%, of at least one alkali-swellable emulsion (6);
iv) 0 to 5 wt.%, preferably 0 to 4 wt.%, of at least one, preferably waterborne, latex binder (7);
v) 0 to 5 wt.%, preferably 0 to 4 wt.%, of at least one further component (8) selected from the group of dispersants, waterborne crosslinking agents, filler, proteins, polysaccharides and their derivatives, and synthetic water-soluble polymers; and
vi) at least one solvent (9), in particular water,

wherein the wt.% are based on their solids content in relation to the solids content of the total slurry (1), determined according to ASTM D3926-05(2019). Thus, the components i) to v) sum up to 100 wt.% of total solids.

Furthermore, the at least one alkali-swellable emulsion (6), i.e., ASE (6), is, according to the invention, an emulsion- or suspension copolymerizate of

- at least one nonionic monomer (6a) comprising butadiene, styrene or at least one (meth)acrylate monomer, and optionally acrylonitrile, and
- at least one olefinically unsaturated carboxylic acid or olefinically unsaturated carboxylic acid salt (6b),

wherein the (meth)acrylate monomer is a $C_1$- to $C_4$- alkyl (meth)acrylate monomer, such as methyl (meth)acrylate, ethyl (meth)acrylate, n- or i-propyl (meth)acrylate and/or n-, i- or t-butyl (meth)acrylate. More preferably, the (meth)acrylate monomer is a $C_1$- to $C_2$- alkyl (meth)acrylate monomer, i.e., methyl (meth)acrylate and/or ethyl (meth)acrylate. The ASE (6) may further comprise one or more olefinically unsaturated crosslinking monomers (6c) and/or one or more functional monomers (6d), such as acrylamide. Commercially available ASE (6) thickeners may be so-called acrylic thickener.

Therefore, the alkali-swellable emulsion (6) is not hydrophobically modified, i.e., comprises, based on the total amount of added monomers, less than 0.2 wt.%, preferably less than 0.1 wt.%, and in particular no, i.e., 0 wt.%, monomers having a $C_5$- to $C_{40}$-alkyl-group, such as $C_5$- to $C_{40}$-alkyl (meth)acrylate. Preferably, the ASE (6) further comprises, based on the total amount of added monomers,

- no, i.e., 1 wt.% or less, preferably 0.5 wt.% or less, in particular 0.2 wt.%, and most preferably 0 wt.%, of olefinically unsaturated monomers, e.g., a (meth)acrylate-type monomers, comprising a $C_5$- to $C_{40}$-cycloalkyl-, aryl-, (cyclo) alkenyl-, and/or (cyclo)alkyne-group, and/or

- no, i.e., 1 wt.% or less, preferably 0.5 wt.% or less, in particular 0.2 wt.%, and most preferably 0 wt.%, of associative monomers, i.e., an olefinically unsaturated monomer, e.g., a (meth)acrylate, comprising a long-chain hydrophilic segment - such as an (EO)x group with x = 2 or larger, or an EO-PO (block)copolymer - terminated with a hydrophobic group, such as a $C_5$- to $C_{40}$-alkyl-group.

It is noted, that when the content of the at least one alkali-swellable emulsion (6) is as low as 0.1 wt.%, the sum of the at least one of the components ii), iv) and/or v) needs to be present in an amount of 1.9 wt.% or higher, based on the total amount of added solid components i) to v).

A non-limiting, exemplary composition of ASE (6) is disclosed in EP-B-093 206 and may be an aqueous copolymer dispersion of a 3-ethylenically unsaturated carboxylic acid such as methacrylic acid, an ester of an a,β-ethylenically unsaturated carboxylic acid such as a $C_1$- to $C_4$- (meth)acrylate, e.g., ethyl acrylate, an unsaturated carboxamide such as acrylamide, an unsaturated nitrile such as acrylonitrile, from 0.01 to 10 weight percent of a crosslinking monomer such as allyl methacrylate, said weight percent being based on the total weight of the copolymer, and, optionally one or more copolymerizable monomers.

Due to the chemical nature of ASE (6), its viscosity in aqueous solutions at low pH, e.g., pH 3, low, e.g., around 500 mPa.s at a solids content of about 40 wt.%. Upon increasing the pH, more and more carboxyl groups get deprotonated, which causes an increase of the viscosity, e.g., at pH 7, to 3000 to 7000 mPa.s, or even higher.

According to the present invention, the term alkali-swellable emulsion (6) includes so-called alkali-soluble emulsions, which exhibit at low to neutral pH the same viscosity behavior in function of the pH. Due to higher hydrophilicity, and/or due to lower molecular weight, the alkali-soluble emulsions dissolve in alkaline aqueous solutions, e.g., at pH of 9 or higher. Thus, the term alkali-swellable emulsion stands according to the invention for emulsions which exhibit at pH 10 a turbidity of higher than 1.0 NTU, measured according to the US EPA Method No. 180.1, "Turbidity".

Hence, it is possible to adjust the desired viscosity of the slurry (1) according to the invention easily by adjusting the pH, e.g., to around neutral.

According to the invention, the at least one alkali-swellable emulsion (6) comprises at least one olefinically unsaturated carboxylic acid or olefinically unsaturated carboxylic acid salt (6b). At low pH, e.g., at a pH of around 3, the viscosity of the ASE (6) is low, e.g., around 500 mPa.s at a solids content of about 40 wt.%. Upon increasing the pH, more and more carboxylic groups get deprotonated, which causes an increase of the viscosity. Thus, it is also possible to adjust easily the desired viscosity by just varying the pH.

In contrast to ASE (6), hydrophobically modified alkali-swellable emulsions, i.e., HASE thickener, or just HASE, comprise a hydrophobic group, such as an alkyl (meth)acrylate monomer having a $C_5$- to $C_{30}$-alkyl-group. In one embodiment - as disclosed in US-A-2021/0151760 - HASE thickeners are reported to be an acrylic polymer having said hydrophobic functional group, and an acid functional group, which may be poly(meth)acrylic acid, dispersed in water. In another embodiment, HASE thickeners refer to usually a terpolymer consisting of i) a carboxylic acid monomer such as (meth)acrylic acid, ii) an alkyl (meth)acrylate monomer having with, e.g., a $C_1$- to $C_5$-alkyl-group, and iii) a third monomer, e.g., comprising a hydrophobic group. The latter may be a (meth)acrylate monomer comprising a $C_6$- to $C_{30}$-alkyl-group as a hydrophobic pendant, as reported in US-A-2021/0384512. The hydrophobic pendent may be directly linked with the (meth)acrylate group, or the hydrophobic pendent may terminate a spacer group, which may a long-chain hydrophilic segment, e.g., a poly ethoxy or a poly(ethoxy-propoxy) group. Thus, the third monomer may be an associative monomer, resulting in an associative HASE thickener. The HASE thickeners are hydrophobically modified emulsions which may be alkali-swellable or alkali-soluble. The hydrophobic modification of the HASE thickeners have a strong influence on at least the rheology of, e.g., the slurries containing the HASE thickeners. This is in clear contrast to ASE (6) thickener.

In a preferred embodiment, the slurry (1) is adjusted with the amount of solvent (9) added, to exhibit a total solids content of between about 40 to 60 wt.%, preferably about 44 to 56 wt.%, and in particular about 47 to 53 wt.%, determined according to ASTM D3926-05(2019).

In another preferred embodiment, the slurry (1) is adjusted with the added amount of thickener, i.e., most typically the alkali-swellable emulsion (6), and optionally with the amount of solvent (9), to a Brookfield viscosity of between 1'000 and 10'000 mPa.s, preferably between 1'500 and 7'500 mPa.s, and in particular between 2'000 and 5'000 mPa.s, determined according to ISO 2555:2018 using a disc spindle. In order to obtain the proper viscosity, it is preferred to adjust the pH to about neutral to slight basic, i.e., to about a pH of 6 to 9, when measured with pH paper. It is noted that the relative inaccurate determination of the pH with simple pH paper is sufficient - in particular due to the vast amount of anode active material (4) such as graphite, which makes a pH measurement using a pH electrode difficult.

In one preferred embodiment, the slurry (1) according to the invention com prises

i) 0.1 to 5 wt.%, preferably 1 to 4 wt.%, of at least one alkali-swellable emulsion (6) with a glass transition temperature

$T_g$ of between -20° and +90°C, preferably between -10°C and +40°C, and 0 to 0.4 wt.%, preferably 0 wt.%, latex binder (7). Hence, the at least one alkali-swellable emulsion (6) may even provide binding properties and may act as sole binder in the slurry (1). The specific and not too high glass transition temperature $T_g$ of the alkali-swellable emulsion (6) facilitates film formation of the ASE (6) and thus provides binding properties to the anode active material layer (1*), allowing to reduce or even omit the latex binder (7). Furthermore, omitting the latex binder (7) facilitates the making of the slurry, since no latex binder needs to be purchased, stored nor added; or

ii) 0.1 to 5 wt.%, preferably 0.2 to 4 wt.%, of at least one alkali-swellable emulsion (6) with a glass transition temperature $T_g$ of between -20° and +120°C, preferably between -10°C and +100°C, and 0.5 to 5 wt.%, preferably 1 to 4 wt.%, latex binder (7). The presence of the additional latex binder (7) adds a further formulation ingredient and thus increases the degree of freedom to optimize the overall performance of the composition, i.e., of the slurry (1), and thus of the anode active material layer (1*), as well as the anode (10);

wherein the glass transition temperature $T_g$ is measured according to ISO 11357-1:2016 with a heating rate of 10° C/min DSC (midpoint).

The at least one anode active material (4) represents the major component of the slurry (1) and thus of the anode active material layer (1*). The anode active material (4) allows to store and release the lithium ions upon charging and discharging the Li-ion battery (3). Thus, the Li-ions intercalate in the anode active material (4). Preferred, non-limiting examples of anode active materials (4) include graphite, in particular natural graphite, artificial graphite, synthesized graphite, curved graphite, activated carbon, non-graphitizable carbon, soft carbon, hard carbon, mesocarbon microbeads (MCMB), silicon particulate, Si-C composite particulate, silicon oxide, such as silicon monoxide (SiO) and silicon dioxide (SiO$_2$), tin oxide (SnO), tin dioxide (SnO$_2$), tin particulate, lithium titanate (e.g., Li$_4$Ti$_5$O$_{12}$), and mixtures thereof.

The optional at least one conductive material (5) facilitates intercalation of Li-ions and thus enhances fast charging of Li-ion batteries. A widely used conductive material (5) is carbon black (CB), which is an amorphous carbon with graphite-like crystallites that have more orientations and a larger lattice spacing than graphite. Preferred, non-limiting examples of conductive materials (5) include carbon black, acetylene black, ketjen black, carbon fibers, carbon nanotubes, activated carbon, graphene, petroleum coke, and mixtures and/or combinations thereof.

The at least one alkali-swellable emulsion (6) of the slurry (1), abbreviated ASE (6), acts as thickener, i.e., thickens the slurry (1). Furthermore, the ASE (6) maintains a good dispersibility of the slurry (1). According to the invention, the ASE (6) is the key ingredient to improve the adhesion of the anode active material layer (1*) to the current collector (2). The ASE (6) of the present invention is not hydrophobically modified, i.e., it differs from hydrophobically modified alkali-swellable emulsions (HASE).

In a preferred embodiment, the at least one alkali-swellable emulsion (6) is an emulsion- or suspension copolymerizate of at least one nonionic monomer (6a) comprising at least one (meth)acrylate monomer and optionally acrylonitrile, wherein the (meth)acrylate monomer is a C$_1$- to C$_4$- alkyl (meth)acrylate monomer, and at least one olefinically unsaturated carboxylic acid and/or olefinically unsaturated carboxylic acid salt (6b), and

- at least one olefinically unsaturated crosslinking monomer (6c), and/or
- at least one functional monomer (6d) selected from the group of (meth)acrylates and derivative thereof, and comprising an amine-, amide-, nitrile-, hydroxyl-, glycidyl-, sulfonyl-, ethoxy-, and/or phosphorous-containing group, and derivatives thereof. It is noted that the functional monomer (6d) does not comprise a hydrocarbon chain of 5 or more carbon atoms.

Alkali-swellable emulsions (6) according to the invention are well known to the person skilled in the art. He is able to make, optimize and select them according to the specific application requirements. He is also able to make the appropriate selection of e.g., the type and amount of specific monomer compositions, surfactant(s), initiator(s) as well as process parameters. In addition, suitable alkali-swellable emulsions (6) are commercially available.

In another, particularly preferred embodiment, which provides particularly optimal performance, including superior adhesion, the at least one alkali-swellable emulsion (6) of the slurry (1) is an emulsion or suspension copolymerizate based copolymer of

a) 30 to 79 wt.%, preferably 35 to 75 wt.%, in particular 40 to 75 wt.%, of at least one nonionic monomer (6a) selected from the group of C$_1$- to C$_4$- alkyl (meth)acrylate ester such as methyl (meth)acrylate, ethyl (meth)acrylate and butyl (meth)acrylate, styrene, butadiene, ethylene, propylene, vinyl acetate, vinyl propionate, and acrylonitrile;

b) 21 to 60 wt.%, preferably 25 to 55 wt.%, in particular 25 to 50 wt.%, of at least one olefinically unsaturated carboxylic acid and/or olefinically unsaturated carboxylic acid salt (6b), preferably selected from the group of acrylic acid, methacrylic acid, maleic acid, itaconic acid and their salts, wherein the salts are preferably alkali metal salts, in particular lithium (Li), sodium (Na) and/or potassium (K) salts;

c) 0 to 10 wt.%, preferably 0.01 to 7.5 wt.%, in particular 0.1 to 5 wt.%, of at least one olefinically unsaturated crosslinking monomer (6c), preferably selected from the group of di- or tri (meth)acrylate, allyl (meth)acrylate, polyalkylene and alkylene glycol di (meth)acrylate, such as polyethylene glycol di (meth)acrylate, polypropylene glycol di (meth)acrylate, tri- and tetraethylene glycol di (meth)acrylate and ethylene glycol (meth)acrylate; 1,3-butanediol di (meth)acrylate, 1,4-butanediol di (meth)acrylate, glycerol di (meth)acrylate, trimethylolpropane tri (meth) acrylate, diurethane di (meth)acrylate, N-methylol (meth)acrylamide, divinyl benzene, 1,6-hexanediol di(meth)acrylate, trimethylolpropane diallyl ether, tetraallyl pentaerythritol, triallyl pentaerythritol, diallyl pentaerythritol, diallyl phthalate, triallyl cyanurate, bisphenol A diallyl ether (meth)acrylamide, methylene bisacrylamide, allyl sucrose, and mixtures thereof;

d) 0 to 20 wt.%, preferably 0 to 17.5 wt.%, in particular 0 to 15 wt.%, of at least one functional monomer (6d), wherein the functional monomer (6d) is preferably selected from the group of (meth)acrylates and derivative thereof, comprising an amine-, amide-, nitrile-, hydroxyl-, glycidyl-, sulfonyl-, ethoxy-, and/or phosphorous-containing group, and derivatives thereof, wherein the functional monomer (6d) is in particular selected from the group consisting of hydroxy alkyl (meth)acrylate, amino alkyl (meth)acrylate, alkyl- and di-alkyl amino alkyl (meth)acrylate, hydroxy alkyl (meth)acrylamide, amino alkyl (meth)acrylamide, alkyl- and di-alkyl amino alkyl (meth)acrylamide, and glycidyl (meth)acrylate, wherein the alkyl-group is preferably a methyl-, ethyl- propyl- or butyl- group, and wherein the functional monomer (6d) is not an olefinically unsaturated carboxylic acid or olefinically unsaturated carboxylic acid salt (6b). Thus, the functional monomer (6d) does not comprise a $C_5$- to $C_{40}$- alkyl group and is therefore not hydrophobically modified;

wherein the wt.% of the monomers 6a, 6b, 6c and 6d are based on the sum of all copolymerized monomers and sum up to 100 wt.% of the total monomers, and wherein the alkali-swellable emulsion (6) comprises, based on the total amount of the added monomers, less than 0.2 wt.%, preferably less than 0.1 wt.%, and in particular no, monomers comprising a $C_5$- to $C_{40}$-alkyl (meth)acrylate, and thus the alkali-swellable emulsion (6) is not hydrophobically modified. It is noted that the skilled person in the art is well capable of making suitable alkali-swellable emulsions (6).

Yet, in a further preferred embodiment, the monomers 6a, 6b, 6c and 6d for making the emulsion- or suspension copolymer of the alkali-swellable emulsion (6) are selected to result in a glass transition temperature $T_g$ of the alkali-swellable emulsion (6), when having a pH of 5, in particular a pH of 5.0, of between -20°C and +120°C, preferably between 0°C and +100°C, and in particular of between +20°C and +90°C, measured according to ISO 11357-1:2016 with a heating rate of 10° C/min, wherein the midpoint of the DSC curve is taken, e.g., using a differential scanning calorimeter DSC 3+ (Mettler). In case the alkali-swellable emulsion (6) exhibits more than one glass transition temperature $T_g$, all recorded glass transition temperatures $T_g$ referring to 25% or more of the total softening area, i.e., the area, which is covered by the resulting curve, shall be preferably within the defined range. As an example, the alkali-swellable emulsion (6) is poured into a 40 μL aluminum cup (about 9 to 12 mg, when dried), heated at 140 °C for 2 hours, cooled down to ambient temperature, followed by heating in the DSC instrument at 140° C for 5 minutes to remove residual traces of moisture, then cooled down to the desired temperature (-40 °C). The subsequent DSC measurement is carried out over a temperature range of -40° C to 120° C. This allows film-formation of the ASE (6) during the first or subsequent dry step of the anode active material slurry (1), when applied on the anode current collector (2). Furthermore, said film-formation increases assumingly the binding characteristics of the ASE (6), which increases adhesion and/or allows to reduce or even omit the latex binder (7).

The at least one latex binder (7) of the slurry (1) is an optional component, i.e., it may or may not be present. Since the anode active material (4) is most typical in the form of solid particles, the latex binder (7) binds said particles together to form a coherent mass. Furthermore, the latex binder (7) helps - or even is responsible for - to adhere anode active material layer (1*) to the current collector (2). In many cases, in particular when the binding properties of the alkali-swellable emulsion (6) the glass transition temperature of the at least one alkali-swellable emulsion (6) is not sufficient, e.g., when the glass transition temperature $T_g$ is relatively high, e.g., above 60°C, and/or the amount of ASE (6) is low, e.g., 0.5 wt.% or below, the presence of the latex binder (7) in the slurry (1) is preferred. In contrast to the alkali-swellable emulsion (6), the content of the total of olefinically unsaturated carboxylic acid and olefinically unsaturated carboxylic acid salts of latex binders (7) are lower, i.e., 20 wt.% or lower, in particular 10 wt.% or lower, based on the total amount of monomer employed. Suitable latex binders (7) are commercially available.

In a preferred embodiment, the optional latex binder (7)

i) is based on monomers selected from the group of aromatic vinyl monomers, such as styrene; conjugated diene monomers, such as butadiene and isoprene; alkenes, such as ethylene and propylene; $C_1$- to $C_{20}$- alkyl esters of (meth)acrylic acid; acrylamide and derivatives thereof; acrylonitrile; acrylamide; vinyl esters of $C_1$- to $C_{20}$- carboxylic acids, such as vinyl acetate, vinyl propionate, vinyl versatate and vinyl stearate; vinyl chloride; and mixtures thereof; and/or

ii) is based on a polymer or copolymer of styrene-butadiene (SB), $C_1$-to $C_{20}$- alkyl (meth)acrylate, styrene (meth)acrylate, ethylene vinylacetate (EVA) with preferably an ethylene content of between 5 wt. to 85 wt.% and vinyl acetate content of between 95 to 15 wt.%, ethylene propylene diene mixture (EPDM), vinyl acetate-vinyl versatate (VA/-

VeoVa), vinyl acetate-vinyl versatate-(meth)acrylate (VA/VeoVa/Ac), ethylene-vinyl chloride (E/VC), and/or vinyl acetate-ethylene-vinyl chloride (VA/E/VC), and mixtures thereof; and/or

iii) has a glass transition temperature $T_g$ of between -40°C and +90°C, preferably between -30°C and +50°C, wherein the glass transition temperature $T_g$ of copolymers is calculated according to the Fox equation, wherein the glass transition temperature $T_g$ of homopolymers are taken from literature (Polymer Data Handbook, Oxford University Press, Inc., 1999).

It is noted that the latex binder (7) may also comprise one or more functional monomers. Non-limiting examples of suitable functional monomers include carboxylic acid monomers, such as (meth)acrylic acid, itaconic acid and fumaric acid, and their salts; (meth)acrylate monomers comprising an amine-, amide-, nitrile-, hydroxyl-, glycidyl-, sulfonyl-, and/or ethoxy-, group, such as hydroxy alkyl (meth)acrylate, amino alkyl (meth)acrylate, alkyl- and di-alkyl amino alkyl (meth)acrylate, hydroxy alkyl (meth)acrylamide, amino alkyl (meth)acrylamide, alkyl- and di-alkyl amino alkyl (meth)acrylamide, and glycidyl (meth)acrylate, wherein the alkyl-group is preferably a methyl-, ethylpropyl- or butyl- group.

The skilled person in the art is well able to select the best latex binder (7) being based on the optimal monomers, polymers and/or copolymers, and which may comprise one or more functional monomers. Furthermore, he is capable to make such a latex binder (7).

The Fox equation calculates the glass transition temperature $T_g$ of a copolymer, and thus also of the latex binder (7), based on the relative weight of the glass transition temperature $T_g$ of the homopolymers according to the following equation (I):

$$1/T_g \text{ (copolymer)} = w_1 / T_g \text{ (polymer 1)} + \sum_{x=2}^{n} w_x / T_g \text{ (polymer x)} \quad \text{(I)}$$

wherein

$w_1$ is the wt. fraction of the first homopolymer 1
$w_x$ is the wt. fraction of any further homopolymer x
$T_g$ (polymer 1) is the glass transition temperature $T_g$ of the first homopolymer 1
$T_g$ (polymer x) is the glass transition temperature $T_g$ of any further homopolymer x

Such latex binders (7) based on said monomers and/or (co)polymers, and/or having a glass transition temperature $T_g$ within said range, provide particularly valuable properties, in particular adhesion, flexibility, and durability.

Furthermore, the latex binder (7) and the alkali-swellable emulsion (6) are preferably waterborne to avoid introduction of unwanted volatile organic compounds, VOC's. Thus, the binder comprises less than 1 wt.%, preferably less than 0.5 wt.%, of VOC, i.e., of volatile organic compounds having a boiling point of 250°C or below, measured at a pressure of 101,3 kPa, wherein the wt.% are based on the total amount of latex binder (7), measures according to the Directive 2004/42/EG of the European Parliament and of the Council, of April 21, 2004.

The slurry (1) according to the invention may comprise at least one further component (8) selected from the group of dispersants, waterborne crosslinking agents, filler, proteins, synthetic water-soluble polymers, polysaccharides, and their derivatives. Preferred dispersants include nonionic and anionic surfactants. Preferred waterborne crosslinking agents include carbodiimide. Preferred fillers include clay and silica. Preferred proteins include gelatin and casein. Preferred synthetic water-soluble polymers include polyvinyl alcohol (PVOH), polyvinyl pyrrolidone (PVP), ethylene glycol, EO/PO block polymers, polyacrylic acids (PAA) with a MW up to e.g., 100'000 Da or even higher. Preferred polysaccharides and their derivatives include cellulose, starch, guar gum, xanthan gum, agar-agar, and dextrin, as well as their alkyl ether, hydroxy alkyl ether, and carboxy alkyl ether, in particular methyl, ethyl and propyl ether, hydroxy methyl, hydroxy ethyl, and hydroxy propyl ether, as well as carboxymethyl ether. Non-limiting examples of preferred polysaccharide and their derivatives include polysaccharide fibers, and water-soluble polysaccharide derivatives such as carboxyalkyl cellulose, carboxymethyl cellulose (CMC), methyl cellulose, ethyl cellulose, hydroxy methyl cellulose, hydroxy ethyl cellulose, hydroxy propyl cellulose, carboxymethyl starch, carboxymethyl guar, methyl guar, ethyl guar, hydroxy methyl guar, and hydroxy ethyl guar.

Although it is one aim of the invention to provide an alternative thickener to carboxymethyl cellulose and to overcome its disadvantages, the addition of carboxyalkyl cellulose in small amounts, e.g., up to 0.5 wt.%, preferably up to 0.2 wt.%, based on their solids content in relation to the solids content of the total slurry (1), determined according to ASTM D3926-05(2019), may be advantageous to improve the performance of the slurry (1), e.g., its dispersibility. However, in many cases it is preferred that no carboxymethyl cellulose, i.e., 0 wt.%, is added. It is noted that the disadvantages of carboxymethyl cellulose (CMC) have been overcome by the presence of the at least one alkali-swellable emulsion (6), independent on the additional presence of small amounts of CMC.

The slurry (1) comprises further at least one solvent (9). The preferred solvent (9) is water. Preferably, the slurry (1) comprises less than 0.2 wt.%, preferably less than 0.1 wt.%, and in particular 0 wt.%, of VOC, i.e., of volatile organic compounds having a boiling point of 250°C or below, measured at a pressure of 101,3 kPa, wherein the wt.% are based on the total amount of slurry (1), measures according to the Directive 2004/42/EG of the European Parliament and of the Council, of April 21, 2004. Thus, the slurry is environmentally friendly and does not - or only to a tiny amount - comprise unwanted volatile components. As a conclusion thereof, no specific precautions are required when drying the active material slurry (1) applied on the anode current collector (2).

The anode (10)

The anode (10) is - during discharge of the second Li-ion battery (3) - the negative electrode.

The anode (10) of the present invention comprises an anode active material layer (1*) coated on the anode current collector (2), wherein the anode active material layer (1*) is the anode active material slurry (1) of the invention, when applied onto the anode current collector (2) and dried.

In a preferred embodiment, the anode current collector (2) of the anode (10) is - due to its excellent electrically conductive properties - based on, and in particular is, a copper foil.

In another preferred embodiment, the

i) anode active material layer (1*) of the anode (10) has a thickness of between 5 $\mu$m and 5 mm, preferably between 0.01 mm and 2 mm, and/or a density after calendering between 1 g/cm$^3$ and 2 g/cm$^3$, and/or between 1.2 g/cm$^3$ and 1.9 g/cm$^3$; and/or

ii) anode current collector (2) of the anode (10) has a thickness of between 1 $\mu$m and 1 mm, preferably between 2 $\mu$m and 0.2 mm;

wherein the thickness of the anode active material layer (1*) and the anode current collector (2) is determined after calendering according to ISO 2808:2019, preferably with a micrometer gauge, and the density of the anode active material layer (1*) is determined by dividing the weight of the coated anode active material layer (1*) by its volume, determined by multiplying its thickness, measured according to DIN 862 / Form A1 using a micrometer, with the covered area.

Thus, the anode (10) is well suited for basically any size for known types of secondary Li-ion batteries (3) and can be optimized to provides best performance.

The process to make the anode (10)

The process of the invention is designed to make the anode (10) according to the invention for the secondary Li-ion battery (3). The process comprises coating the anode current collector (2) of the anode (10) with the anode active material slurry (1) of the invention.

In a first step a), the at least one anode active material (4), the optional at least one conductive material (5), the at least one alkali-swellable emulsion (6), the optional latex binder (7) and the optional further component (8) are optionally upon addition of solvent (9), to obtain the anode active material slurry (1). The solvent (9) can be added beforehand, during the addition of the various compounds - either continuously or batch-wise - and/or after the addition of the components (4) to (8), e.g., to adjust solids and/or viscosity of the slurry (1).

The mixing of the components (4) to (9) is not limited to a specific type of mixer. The skilled person in the art can make the proper selection, which may depend on the scale of mixing. Furthermore, he can select the mixing sequence, as well as the time for mixing. It is possible to use one or more than one mixer. Preferred, non-limiting examples of mixer include ball mixing, ultrasonic mixing, super mixer, Henschel mixer, flash mixer, flow jet mixer, drum mixer, ribbon cone mixer, pug mixer, nauta mixer, ribbon mixer, spartan granulator, Loedige mixer, planetary mixer, hydrodynamic shear mixer, screw-type kneader, defoaming kneader, paint shaker, pressure kneader, and two-roll kneader.

In a second, optional process step b), the pH, solids and/or viscosity of the slurry (1) are adjusted, if required, by adding a base, an acid, one or more solvents (9) and/or a thickening agent, wherein the thickening agent is different from the at least one alkali-swellable emulsion (6). In case there is a need, the skilled person is able to select the type and the amount of said additives and perform this optional step b).

In a further process step c), the resulting anode active material slurry (1) from step a) and optional step b) is applied, i.e., coated, on one or both sides of the anode current collector (2). Preferred coating means include slot-die, doctor blade, comma bar, backing roll or tensioned web.

It is noted, that applying the slurry (1) by electrostatic means is not part of the inventive process, since the slurry (1) is not suited at all for electrostatic application, e.g., electrostatic coating. The reason is believed to be in the non-ionic nature of the anode active material (4). Thus, an electrostatic deposition would lead in a non-homogeneous deposited layer, which is unwanted. Furthermore, electrodeposition does not allow to obtain a large enough thickness of the deposited slurry (1) on the anode current collector (2).

In a following process step d), the applied anode active material slurry (1) is subjected to a first drying step to result in the anode active material layer (1*) coated on the anode current collector (2). This drying step may include subjecting the anode active material slurry (1) applied on the anode current collector (2) to warm, e.g., temperatures of 70°C or below, hot, e.g., to temperatures of up to 150°C or above, and/or low-humidity air, wherein drying may be performed at ambient pressure or in a vacuum, e.g., at pressures of 0.1 atm or lower. Alternatively, or in addition, drying may be performed using irradiation with e.g., infrared light, or electron beams. This drying step may be carried out just for some minutes or for an hour or more, depending on the size and thickness of the anode active material slurry (1) which needs to be dried, as well as on the drying capability of the apparatus, the applied slurry (1) is subjected to.

In a further, optional process step e), the anode active material layer (1*) coated on the anode current collector (2) is subjected to at least one further drying step. As such, a total of even 4 or more drying steps may be possible, e.g., i) starting at low temperature of about 60°C, ii) increase the temperature to e.g., 150°C, iii) decrease the temperature to about 60°C, and iv) maintaining the temperature at about 60°C. Said drying steps are known to the skilled person in the art.

In yet a further, optional process step f), the anode active material layer (1*) coated on the anode current collector (2) is optionally calendered after the final drying step, to result in a density of the anode active material layer (1*) of between 1 g/cm$^3$ to 2 g/cm$^3$, determined by dividing the weight of the coated anode active material layer (1*) by its volume, determined by multiplying its thickness, measured according to DIN 862 / Form A1 using a micrometer, with the covered area. Such a calendering step is known to the skilled person in the art.

Following these steps, the obtained anode (10) is typically subjected to further steps, e.g., by a slitting process, by vacuum drying, and afterwards further processed to obtain the secondary Li-ion battery (3) comprising the anode (10) of the invention. These process steps are known to the skilled person in the art and he is well able to manufacture the secondary Li-ion battery (3).

In a preferred embodiment of the process of the invention, the anode active material slurry (1) is adjusted to

- a pH of between 4 and 10, in particular a pH of 5 and 9. Adjusting the pH may be performed using a base, e.g., NaOH, KOH, NaHCOs, NH$_4$OH, preferably in the form of an aqueous solution;
- a Brookfield viscosity between 500 mPa.s and 10'000 mPa.s, preferably between 2'000 mPa.s and 7'000 mPa.s, measured at 15 rpm and 23°C according to ISO 2555:2018, using a disc spindle; and/or
- a solids content of 30 to 70 wt.%, preferably 40 to 60 wt.%, based on the total amount of anode active material slurry (1), and measured according to ASTM D3926-05(2019).

In another preferred embodiment of the process of the invention,

- the anode active material slurry (1) is applied on one or both sides of the anode current collector (2) with a coat weight per side of about 30 g/m$^2$ to about 150 g/m$^2$, preferably of about 60 g/m$^2$ to about 120 g/m$^2$, based on the dried slurry (1), to obtain the anode, wherein the anode active material slurry (1) is applied preferably by means of a slot casting process, doctor blade, comma bar, backing roll or tensioned web; and/or
- the anode active material layer (1*) coated on the anode current collector (2), is dried in at least one further drying step between 40°C and 350°C, preferably between 60°C and 250°C, and preferably at ambient pressure.

The proper pH-, viscosity- and/or solids adjustment provides optimal parameter to apply, i.e., coat, the anode active material slurry (1) onto one or both sides of the anode current collector (2), including to get the desired coat weight. The latter is demanded by the developer of Li-ion batteries (3) to achieve the targeted performance of the Li-ion battery (3).

The use of the anode active material slurry (1)

The anode active material slurry (1) of the present invention is particular useful for coating the anode current collector (2) to obtain the anode (10) for Li-ion batteries (3) according to the inventive process, independent on the size and use of the Li-ion battery (3).

Examples

*Preparation of the premix PM-1*

Graphite (C-NERGY™ Actilion GHDR 15-4 from Imerys) and carbon black (C-NERGY Super C65T from Imerys) were dried separately in an oven at 120°C for 8 hrs.

96 parts of the dried graphite, i.e., anode active material (4), were added into a 5-L. double planetary disperser-type mixer, made by Ross China (model DPD-2R), followed by the addition of 1 part of carbon black, i.e., conductive material (5). The graphite and the carbon black were mixed at 400 rpm for 10 min. to obtain a homogeneous dry powder mixture, i.e., the premix PM-1, which was split up between all subsequent formulations.

*Preparation of the premix PM-2*

The preparation of premix PM-1 was repeated with synthetic Graphite BTR (grade EV7 from Shanghai Shanshan) and carbon black *(Super P Li from Imerys).*

*Preparation of the alkali-swellable emulsion ASE-1 (6)*

The experimental alkali-swellable emulsion ASE-1 (6), which acts as thickener, was made by conventional emulsion polymerization. To a suitably sized polymerization vessel were 188 parts of water, 0.02 parts of a chelating agent and 0.5 parts of an anionic surfactant added. The vessel is then heated to 80 °C. A first monomer feed stream comprising 60 parts ethyl acrylate, 15 parts acrylonitrile, 25 parts methacrylic acid and 0.05 parts of allyl methacrylate are added to the mildly stirred aqueous polymerization mixture for a period of about 4 hours. Coincident with the addition of the monomers, an additional 50 parts water, 2.0 parts of anionic surfactant, 0.2 parts of sodium hydroxide, and 0.7 parts of a free-radical initiator is added to the polymerization medium. The temperature of the vessel is maintained at 80°C during the addition of the monomer and polymerization aids and for an additional 2 hours. At the end of this period, the vessel is then cooled to ambient temperatures and the subsequent emulsion subjected to steam distillation to remove the unconverted monomer.
The resulting emulsion contains about 30 percent solids, which was further diluted with water to a solid content of 27 wt.%, determined according to ASTM D3926-05(2019), a Brookfield viscosity of 50 mPa.s, determined according to ISO 2555:2018 and measured at 50 rpm using a disc spindle, a pH of 5.3, a major glass transition temperature $T_g$ of 85°C and a minor glass transition temperature Tg of 44°C covering less than 25% of the total softening area, i.e., the area, which is covered by the resulting DSC curve, measured according to ISO 11357-1:2016 with a heating rate of 10° C/min, wherein the midpoint of the DSC curve is taken.
No pH adjustment was made before further use.

*Preparation of carboxymethyl cellulose solution (for reference examples 2 and 3)*

For the reference examples 2 and 3 was carboxymethyl cellulose (Sunrose MAC 500) used, instead of ASE-1. The CMC was dried in an oven at 85°C for 8 hrs. prior use.
A 1.2% (w/w) aqueous solution of carboxymethyl cellulose was prepared by adding to a 5 L. beaker 98.8 parts of deionized water, followed - while stirring - by slow addition of 1.2 part of dried CMC. The mixture was stirred using a Dissolver Stirrer at 700 rpm for 30 min. The obtained solution had a Brookfield viscosity of about 10-30 mPa.s, determined according to ISO 2555:2018 and measured at 50 rpm using a disc spindle, and a pH of 6.5-8.5.
No pH adjustment was made before further use.

*The latex binder (7)*

Voltabond™ 029, was used as latex binder (7), which is a commercially available styrene-butadiene latex from Trinseo. Voltabond™ 029 has a solid content of 50 wt.%, determined according to ASTM D3926-05(2019), a Brookfield viscosity of 130 mPa.s, determined according to ISO 2555:2018 and measured at 50 rpm using a disc spindle, a mean particle size of 180 nm, determined by dynamic light scattering using a Nanotrac 150, a pH of 7, and a glass transition temperature of about 5°C, calculated according to the Fox equation.

*Example 1: Preparation of anode active material slurry (1) with ASE-1*

814.8 g of premix PM-1 were added into a 5-L. double planetary disperser-type mixer, made by Ross China (model DPD-2R), equipped with a cooling system, and 51.84 g of ASE-1 were added, followed by thorough mixing at 450 rpm for 5 min., addition of further 271.6 g of premix PM-1, further mixing at 450 rpm for 5 min., addition of further 271.6 g of premix PM-1 and further mixing at 450 rpm for 5 min. After a further mixing step at 1'400 rpm for 50 min., 56 g Voltabond™ 029, i.e., latex binder (7), were added, followed by mixing at 400 rpm for 15 min, and addition of 1.12 g of a 25% ammonia solution. Finally, 1'334.2 g of deionized water were added while slight mixing to adjust the solid content of the obtained anode active material slurry (1) to 50 wt.%. The slurry (1) had a Brookfield viscosity of about 3'500 mPa.s, determined according to ISO 2555:2018 and measured at 15 rpm using a disc spindle.
The obtained anode active material slurry (1) revealed a superior dispersibility and excellent stability. The pH as well as the viscosity of the slurry can easily be adjusted, wherein the properties of the slurry remain robust upon minor changes, in particular with respect to adding further formulation ingredients.

*Reference example 2: Preparation of anode active material slurry with carboxymethyl cellulose (CMC)*

Example 1 was repeated, wherein 1166.8 g of the 1.2 wt.% carboxymethyl cellulose aqueous solution was added instead of ASE-1. Furthermore, 50.4 g Voltabond™ 029, i.e., latex binder (7), were added. A final amount of 224.8 g of deionized water were added while slight mixing to adjust the solids content of the obtained reference anode active material slurry to 50 wt.%. The resulting slurry had a Brookfield viscosity of about 4'100 mPa.s, determined according to ISO 2555:2018 and measured at 15 rpm using a disc spindle.

*Reference example 3: Preparation of anode active material slurry with carboxymethyl cellulose (CMC)*

Example 1 was repeated, wherein 933.2 g of the 1.2 wt.% carboxymethyl cellulose aqueous solution was added instead of ASE-1. Furthermore, 61.6 g Voltabond™ 029, i.e., latex binder (7), were added. A final amount of 447.2 g of deionized water were added while slight mixing to adjust the solids content of the obtained reference anode active material slurry to 50 wt.%.

*Example 4: Preparation of anode active material slurry (1) with ASE-1 and premix PM-2*

Example 1 was repeated but employing premix PM-2. The slurry (1) had a solid content of 50.8 wt.% and a Brookfield viscosity of 5'880 mPa.s, determined according to ISO 2555:2018 and measured at 15 rpm using a disc spindle.

*Example 5: Preparation of anode active material slurry (1) with ASE-1*

Example 4 was repeated but employing 103.68 g of ASE-1 and 28 g of Voltabond™ 029. The slurry (1) had a solid content of 51 wt.% and a Brookfield viscosity of 11'400 mPa.s, determined according to ISO 2555:2018 and measured at 15 rpm using a disc spindle.

*Example 6: Preparation of anode active material slurry with Acrysol™ ASE-60 from Dow®.*

Example 4 was repeated but employing 46.66 g of commercially available Acrysol™ ASE-60 thickener from Dow, which is an alkali-soluble emulsion, and believed to be a combination of a $C_1$- to $C_4$- (meth)acrylate and an olefinically unsaturated carboxylic acid or olefinically unsaturated carboxylic acid salt. Thus, it classifies as an ASE (6) according to the invention. Acrysol™ ASE-60 has a solids content of 30 wt.% and a Brookfield viscosity of 30 cp, at a pH of 3.2. The slurry (1) had, after addition of a 25% ammonia solution to adjust the pH to 7.0, a solid content of 50 wt.% and a Brookfield viscosity of 14'250 mPa.s, determined according to ISO 2555:2018 and measured at 15 rpm using a disc spindle.

*Reference example 7: Preparation of anode active material slurry with carboxymethyl cellulose (CMC)*

Example 4 was repeated, but 1050.0 g of the 1.0 wt.% carboxymethyl cellulose aqueous solution was added instead of ASE-1. Furthermore, 56 g Voltabond™ 029, i.e., latex binder (7), were added. A final amount of 447.2 g of deionized water were added while slight mixing to adjust the solids content of the obtained reference anode active material slurry to 50.8 wt.%. The Brookfield viscosity of the slurry was 5880 mPa.s, determined according to ISO 2555:2018 and measured at 15 rpm using a disc spindle.

*Making of the anode active material layer (1\*) coated on the anode current collector (2) to obtain the anode (10)*

The slurry (1) according to the invention (example 1) and the reference slurries (reference examples 2 and 3) were each applied on one sides of an 8 μm thick copper foil, i.e., the anode current collector (2), using an automatic film applicator with a coat weight of 90 g/m². The coated copper foils comprising the applied slurries were dried in an oven at 60 °C for 5 minutes to obtain an anode active material layer having a density of 1.0 g/cm³ and thus the anode, i.e., the anode (10) according to the invention when using ASE-1 in example 1, and reference anodes when using CMC as thickener in reference examples 2 and 3.

Table 1: Ingredients, slurry properties and anode properties of example 1 and reference examples 2 and 3. The solids of the slurries was adjusted with water to 50 wt.% to obtain a Brookfield viscosity (disc spindle @ 15 rpm) within the targeted range of 3'000 to 4'000 mPa.s. The 90° peel adhesion force was determined without further storage using the peel test according to DIN EN 28510-1:2014-07, with the Texture Analyzer TA.XT plus. The recorded data reflect the mean of 5 measurements.

| Ingredients (dry parts) | Ex 1 | Ex 2 (ref) | Ex 3 (ref) |
|---|---|---|---|
| Premix PM-1 | 97 | 97 | 97 |
| ASE-1 (alkali-swellable emulsion) | 1 | 0 | 0 |
| CMC- MAC 500 (carboxymethyl cellulose) | 0 | 1.2 | 0.8 |
| Voltabond™ 029 (latex binder) | 2 | 1.8 | 2.2 |
| **Slurry properties** | | | |
| Sedimentation after 24 hrs. | no | no | yes |
| **Anode properties** | | | |
| 90° peel adhesion force (after drying) [N/m] | 42.5 a) | 11 | 14 |

a) Adhesion failure without delamination

The results in Table 1 show impressively, that the 90° peel adhesion force of the anode after drying increases drastically in example 1 according to the invention and thus with the alkali-swellable emulsion ASE-1, i.e., by a factor of about 4, when compared to the reference example 2 with 1.2 wt.% of CMC and 1.8 wt.% of latex binder. In addition, the slurry stability of the example 1 with 1 wt.% ASE-1 and the reference example 2 with 1.2 wt.% CMC were fine, i.e., no sedimentation was observed after 24 hrs. However, reference example 3 with 0.8 wt.% CMC revealed a bad sedimentation, i.e., the slurry sedimented within 24 hrs.

It is noted that also reference example 3 with 0.8 wt.% of CMC and 2.2 wt.% of latex binder exhibits a 90° peel adhesion force of the anode in the range of reference example 2 and thus far below the one of example 1. This indicates that the amounts of CMC and latex binder play a minor role with respect to the 90° peel adhesion force, while the exchange of CMC by ASE-1 boosts the 90° peel adhesion force drastically.

In another set of experiments, which are reported on Table 2 below, the slurry (1) according to the invention (examples 4 to 6) and the reference slurry of reference example 7 were each applied on both sides of a 10 µm thick copper foil, i.e., the anode current collector (2), using a transfer roll coating machine from Nanjing Mojiesi Energy Technology Limited (Model TB-300L-1.5M) with a coat weight per side of 90 g/m$^2$. The machine speed is 1 m/min and drying temperature of the oven is 70 °C.

Table 2: Ingredients, slurry properties and anode properties of examples 4 to 6 and reference example 7.

| Ingredients (dry parts) | Ex 4 | Ex 5 | Ex 6 | Ex 7 (ref) |
|---|---|---|---|---|
| Premix PM-2 | 97 | 97 | 97 | 97 |
| ASE-1 (alkali-swellabe emulsion) | 1 | 2 | 0 | 0 |
| Acrysol™ ASE-60 (alkali-soluble emulsion) | 0 | 0 | 1 | 0 |
| CMC- MAC 500 (carboxymethyl cellulose) | 0 | 0 | 0 | 1 |
| Voltabond™ 029 (latex binder) | 2 | 1 | 2 | 2 |
| **Anode properties** | | | | |
| 180° peel adhesion force (before calendering) [N/m] a) | 14.2 | 18.8 | 12.4 | 9.7 |
| 180° peel adhesion force (after calendering) [N/m] a), b) | 8.6 | 10.9 | 7.5 | 3.7 |
| Thickness of anode active material layer (1*) [µm] b), c) | 140 | 138 | 145 | 147 |

(continued)

| Anode properties | | | | |
|---|---|---|---|---|
| Density of anode active material layer (1*) [g/cm³] b), d) | 1.37 | 1.37 | 1.38 | 1.33 |

a) The 180° peel adhesion forces were determined before and after calendering using the peel test according to ASTM D903, with the Texture Analyzer TA.XT plus. The data reflect the mean of 3 measurements.

b) The calendering was carried out using a double-roll compactor MJS-WS9A from Nanjing Mojiesi Energy Technology Limited having two identical rolls with a diameter of 180 mm, a width of 300 mm, and a maximal applicable load of 30 kN. The calendering was carried out at room temperature and a speed of 1m/min.

c) The thickness of the anode active material layer (1*) was determined after calendering according to ISO 2808:2019 using a micrometer gauge.

d) The density of anode active material layer (1*) was determined after calendering by dividing the weight of the coated anode active material layer (1*) by its volume, determined by multiplying its thickness, measured according to DIN 862 / Form A1 using a micrometer, with the covered area.

The results in Table 2 confirm the findings disclosed in Table 1 but obtained by measuring the 180° peel adhesion force before and after calendaring. Thus, the 180° peel adhesion force of the anode active material slurry (1) according to the invention is - before calendering - at least 27% higher than the reference example 7 with CMC. When ASE-1, comprising acrylonitrile, i.e., a monomer (6a), and a minor amount of allyl methacrylate, i.e., an olefinically unsaturated crosslinking monomer (6c), the 180° peel adhesion force before calendering is at least 46 % higher than the reference example 7. And after calendering, the 180° peel adhesion force of the anode active material slurry (1) is at least a factor of two higher than the reference example 7 with CMC. In addition, the anode active material slurry (1), i.e., when employing the non-hydrophobized ASE-1 thickener, results also in higher 180° peel adhesion forces, both before and after calendering, when compared to CMC.

Furthermore, examples 4 and 5 show impressively that increasing the content of the not hydrophobically modified alkali-swellable emulsion (6), i.e., ASE-1, and decreasing the amount of the latex binder (Voltabond™ 029) by a factor of 2, the 180° peel adhesion force of the anode after drying increased without showing any adverse effect in other tests. These results let assume that good adhesive properties can be obtained even without latex binder, such as Voltabond™ 029.

## Claims

1.  Anode active material slurry (1) for coating an anode current collector (2) for a secondary Li-ion battery (3), wherein the slurry (1) comprises

    i) 80 to 98 wt.% of at least one anode active material (4);
    ii) 0 to 5 wt.% of at least one conductive material (5);
    iii) 0.1 to 5 wt.% of at least one alkali-swellable emulsion (6);
    iv) 0 to 5 wt.% of at least one latex binder (7);
    v) 0 to 5 wt.% of at least one further component (8) selected from the group of dispersants, waterborne crosslinking agents, filler, proteins, polysaccharides, and their derivatives; and synthetic water-soluble polymers, and
    vi) at least one solvent (9), in particular water,
    wherein the wt.% are based on their solids content in relation to the solids content of the total slurry (1), determined according to ASTM D3926-05(2019),
    **characterized in that** the at least one alkali-swellable emulsion (6) is an emulsion- or suspension copolymerizate of at least one nonionic monomer (6a) comprising butadiene, styrene or at least one (meth)acrylate monomer, and optionally acrylonitrile, and at least one olefinically unsaturated carboxylic acid or olefinically unsaturated carboxylic acid salt (6b), wherein the (meth)acrylate monomer is a $C_1$-to $C_4$- alkyl (meth)acrylate monomer.

2.  Slurry (1) according to claim 1, wherein the anode active material (4) comprises graphite, in particular natural graphite, artificial graphite, synthesized graphite, curved graphite, activated carbon, non-graphitizable carbon, soft carbon, hard carbon, mesocarbon microbeads (MCMB), silicon particulate, Si-C composite particulate, silicon oxide, silicon monoxide (SiO), silicon dioxide ($SiO_2$), tin oxide (SnO), tin dioxide ($SnO_2$), tin particulate, lithium titanate, and mixtures thereof.

3. Slurry (1) according to claim 1 or 2, wherein the at least one conductive material (5) comprises carbon black, acetylene black, ketjen black, carbon fibers, carbon nanotubes, activated carbon, graphene, petroleum coke, and mixtures thereof.

4. Slurry (1) according to claim 1 or 3, wherein the at least one alkali-swellable emulsion (6) is an emulsion- or suspension copolymerizate of at least one nonionic monomer (6a) comprising at least one (meth)acrylate monomer and optionally acrylonitrile, wherein the (meth)acrylate monomer is a $C_1$- to $C_4$- alkyl (meth)acrylate monomer, at least one olefinically unsaturated carboxylic acid or olefinically unsaturated carboxylic acid salt (6b). and

   - at least one olefinically unsaturated crosslinking monomer (6c), and/or
   - at least one functional monomer (6d) selected from the group of (meth)acrylates and derivative thereof, and comprising an amine-, amide-, nitrile-, hydroxyl-, glycidyl-, sulfonyl-, ethoxy-, and/or phosphorous-containing group, and derivatives thereof.

5. Slurry (1) according to claim 1 or 4, wherein the at least one alkali-swellable emulsion (6) is an emulsion or suspension copolymerizate based copolymer of

   a) 30 to 79 wt.% of at least one nonionic monomer (6a) selected from the group of $C_1$- to $C_4$- alkyl (meth)acrylate ester such as methyl (meth)acrylate, ethyl (meth)acrylate and butyl (meth)acrylate; styrene, butadiene, ethylene, propylene, vinyl acetate, vinyl propionate, and acrylonitrile;
   b) 21 to 60 wt.% of at least one olefinically unsaturated carboxylic acid or olefinically unsaturated carboxylic acid salt (6b), preferably selected from the group of acrylic acid, methacrylic acid, maleic acid, itaconic acid, fumaric acid and their salts;
   c) 0 to 10 wt.% of at least one olefinically unsaturated crosslinking monomer (6c), preferably selected from the group of di- or tri (meth)acrylate, allyl (meth)acrylate, polyalkylene glycol di (meth)acrylate, N-methylolacrylamide, divinyl benzene, 1,6-hexanediol di(meth)acrylate, trimethylolpropane diallyl ether, tetraallyl pentaerythritol, triallyl pentaerythritol, diallyl pentaerythritol, diallyl phthalate, triallyl cyanurate, bisphenol A, diallyl ether, methylene bisacrylamide, allyl sucrose, and mixtures thereof;
   d) 0 to 20 wt.% of at least one functional monomer (6d), wherein the functional monomer (6d) is preferably selected from the group of (meth)acrylates and derivative thereof, comprising an amine-, amide-, nitrile-, hydroxyl-, glycidyl-, sulfonyl-, ethoxy-, and/or phosphorous-containing group, and derivatives thereof, wherein the functional monomer (6d) is in particular selected from the group consisting of acrylamide, hydroxy alkyl (meth) acrylate, amino alkyl (meth)acrylate, alkyl- and di-alkyl amino alkyl (meth)acrylate, hydroxy alkyl (meth)acrylamide, amino alkyl (meth)acrylamide, alkyl- and di-alkyl amino alkyl (meth)acrylamide, and glycidyl (meth) acrylate, wherein the functional monomer (6d) is not an olefinically unsaturated carboxylic acid or olefinically unsaturated carboxylic acid salt (6b);

   wherein the wt.% of the monomers 6a, 6b, 6c and 6d are based on the sum of all copolymerized monomers, and wherein the alkali-swellable emulsion (6) comprises less than 0.2 wt.%, in particular less than 0.1 wt.%, based on the total amount of the added monomers, of $C_5$- to $C_{40}$-alkyl (meth)acrylate, and thus is not hydrophobically modified.

6. Slurry (1) according to claim 5, wherein the monomers 6a, 6b, 6c and 6d are selected to result in a glass transition temperature $T_g$ of the alkali-swellable emulsion (6) when having a pH of 5, of between -20°C and +120°C, preferably between 0°C and +100°C, in particular of between +20°C and +90°C, measured according to ISO 11357-1:2016 with a heating rate of 10° C/min DSC (midpoint).

7. Slurry (1) according to any one of claims 1 to 6, wherein the optional latex binder (7)

   i) is based on monomers selected from the group of aromatic vinyl monomers, such as styrene; conjugated diene monomers, such as butadiene and isoprene; alkenes, such as ethylene and propylene; ethylenically unsaturated carboxylic acids, such as (meth)acrylic acid, itaconic acid and fumaric acid, and their salts; $C_1$- to $C_{20}$- alkyl esters of (meth)acrylic acid; acrylamide and derivatives thereof; acrylonitrile; acrylonitrile and vinyl esters of $C_1$- to $C_{20}$- carboxylic acids, such as vinyl acetate, vinyl propionate, vinyl versatate and vinyl stearate; vinyl chloride; and mixtures thereof; and/or
   ii) is based on a polymer or copolymer of styrene-butadiene (SB), $C_1$- to $C_{20}$- alkyl (meth)acrylate, styrene (meth) acrylate, ethylene vinylacetate (EVA) with preferably an ethylene content of between 5 wt. to 85 wt.% and vinyl acetate content of between 95 to 15 wt.%, ethylene propylene diene mixture (EPDM), vinyl acetate-vinyl versatate (VA/VeoVa), vinyl acetate-vinyl versatate-(meth)acrylate (VA/VeoVa/Ac), ethylene-vinyl chloride (E/VC), and/or vinyl acetate-ethylene-vinyl chloride (VA/E/VC), and mixtures thereof; and/or
iii) has a glass transition temperature $T_g$ of between -40 °C and +90°C, preferably between -30°C and +50°C, wherein the glass transition temperature $T_g$ of copolymers is calculated according to the Fox equation.

8. Slurry (1) according any one of claims 1 to 7, wherein the slurry (1) comprises

   i) 0.1 to 5 wt.%, preferably 1 to 4 wt.%, of at least one alkali-swellable emulsion (6) with a glass transition temperature $T_g$ of between -20° and +90°C, preferably between -10°C and +40°C, and 0 to 0.4 wt.%, preferably 0 wt.%, latex binder (7); or
   ii) 0.1 to 5 wt.%, preferably 0.2 to 4 wt.%, of at least one alkali-swellable emulsion (6) with a glass transition temperature $T_g$ of between -20° and +120°C, preferably between -10°C and +100°C, and 0.5 to 5 wt.%, preferably 1 to 4 wt.%, latex binder (7);

   wherein the glass transition temperature $T_g$ is measured according to ISO 11357-1:2016 with a heating rate of 10° C/min DSC (midpoint).

9. Anode (10) for the secondary Li-ion battery (3), wherein the anode (10) comprises an anode active material layer (1*) coated on the anode current collector (2), wherein the anode active material layer (1*) is the anode active material slurry (1) according to at least one of the claims 1 to 8 when applied onto the anode current collector (2) and dried.

10. Anode (10) according to claim 9, **characterized in that** the anode current collector (2) is based on copper foil.

11. Anode (10) according to claim 9 or 10, **characterized in that** the

    i) anode active material layer (1*) has a thickness of between 5 $\mu$m and 5 mm, preferably between 0.01 mm and 2 mm, and/or a density after calendering between 1 g/cm$^3$ and 2 g/cm$^3$, preferably between 1.2 g/cm$^3$ and 1.9 g/cm$^3$; and/or
    ii) anode current collector (2) has a thickness of between 1 $\mu$m and 1 mm, preferably between 2 $\mu$m and 0.2 mm;

    wherein the thickness of the anode active material layer (1*) and the anode current collector (2) is determined after calendering according to ISO 2808:2019 and the density of the anode active material layer (1*) is determined by dividing the weight of the coated anode active material layer (1*) by its volume, determined by multiplying its thickness, measured according to DIN 862 / Form A1 using a micrometer, with the covered area.

12. Process to make the anode (10) according to any one of claims 9 to 11 for the secondary Li-ion battery (3) by coating the anode current collector (2) with the anode active material slurry (1) according to any one of claims 1 to 8, **characterized in that**

    a) the at least one anode active material (4), optional at least one conductive material, the at least one alkali-swellable emulsion (6), the optional at least one latex binder (7) and the optional at least one further component (8) are mixed, optionally upon addition of solvent (9), to obtain the anode active material slurry (1);
    b) optionally adjusting the pH, solids and/or viscosity of the slurry (1) by adding a base, an acid, one or more solvents (9), and/or a thickening agent, wherein the thickening agent is different from the at least one alkali-swellable emulsion (6);
    c) applying the resulting anode active material slurry (1) on one or both sides of the anode current collector (2);
    d) subjecting the applied anode active material slurry (1) to a first drying step to result in the anode active material layer (1*) coated on the anode current collector (2);
    e) optionally subjecting the anode active material layer (1*) coated on the anode current collector (2) to at least one further drying step; and
    f) wherein the anode active material layer (1*) coated on the anode current collector (2) is optionally calendered after the final drying step, to result in a density of the anode active material layer (1*) of between 1 g/cm$^3$ to 2 g/cm$^3$, determined by dividing the weight of the coated anode active material layer (1*) by its volume, determined by multiplying its thickness, measured according to DIN 862 / Form A1 using a micrometer, with the covered area.

13. Process according to claim 12, **characterized in that** the anode active material slurry (1) is adjusted to

    - a pH of between 4 and 10, in particular a pH of 5 and 9;
    - a Brookfield viscosity between 500 mPa.s and 10'000 mPa.s, preferably between 2'000 mPa.s and 7'000 mPa.s, measured at 15 rpm and 23°C according to ISO 2555:2018, using a disc spindle; and/or
- a solids content of 30 to 70 wt.%, preferably 40 to 60 wt.%, based on the total amount of anode active material slurry (1), and measured according to ASTM D3926-05(2019)

14. Process according to claim 12 or 13, **characterized in that**

- the anode active material slurry (1) is applied on one or both sides of the anode current collector (2) with a coat weight per side of about 30 $g/m^2$ to about 150 $g/m^2$, preferably of about 60 $g/m^2$ to about 120 $g/m^2$, based on the dried slurry (1), to obtain the anode, wherein the anode active material slurry (1) is applied preferably by means of a slot casting process doctor blade, comma bar, backing roll or tensioned web; and/or
- the anode active material layer (1*) coated on the anode current collector (2), is dried in at least one further drying step between 40°C and 350°C, preferably between 60°C and 250°C, and preferably at ambient pressure.

15. Use of the anode active material slurry (1) of any one of claims 1 to 8 for coating the anode current collector (2) to obtain the anode (10) for Li-ion batteries (3) according to the process of any one of claims 12 to 14.


**Patentansprüche**

1. Anodenaktivmaterialslurry (1) zum Beschichten eines Anodenstromableiters (2) für eine Li-Ionen-Sekundärbatterie (3), wobei die Slurry (1) Folgendes umfasst:

i) 80 bis 98 Gew.-% wenigstens eines Anodenaktivmaterials (4);
ii) 0 bis 5 Gew.-% wenigstens eines leitfähigen Materials (5);
iii) 0,1 bis 5 Gew.-% wenigstens einer alkaliquellbaren Emulsion (6);
iv) 0 bis 5 Gew.-% wenigstens eines Latex-Bindemittels (7);
v) 0 bis 5 Gew.-% wenigstens einer weiteren Komponente (8), die aus der Gruppe von Dispergiermitteln, Vernetzungsmitteln auf Wasserbasis, Füllstoffen, Proteinen, Polysacchariden und deren Derivaten ausgewählt ist; und synthetischer wasserlöslicher Polymere und
vi) wenigstens ein Lösemittel (9), insbesondere Wasser,
wobei die Gew.-% auf deren Feststoffgehalt in Bezug auf den Feststoffgehalt der gesamten Slurry (1), bestimmt gemäß ASTM D3926-05(2019), basieren,
**dadurch gekennzeichnet, dass** die wenigstens eine alkaliquellbare Emulsion (6) ein Emulsions- oder Suspensionscopolymerisat aus wenigstens einem nichtionischen Monomer (6a), das Butadien, Styrol oder wenigstens ein (Meth)acrylat-Monomer und optional Acrylnitril umfasst, und wenigstens einer olefinisch ungesättigten Carbonsäure oder einem olefinisch ungesättigten Carbonsäuresalz (6b) ist, wobei das (Meth)acrylat-Monomer ein $C_1$- bis $C_4$-Alkyl(meth)acrylat-Monomer ist.

2. Slurry (1) nach Anspruch 1, wobei das Anodenaktivmaterial (4) Graphit, insbesondere natürlichen Graphit, künstlichen Graphit, synthetischen Graphit, gekrümmten Graphit, aktivierten Kohlenstoff, nicht graphitierbaren Kohlenstoff, weichen Kohlenstoff, harten Kohlenstoff, Mesokohlenstoff-Mikrokügelchen (*mesocarbon microbeads* - MCMB), Siliciumpartikel, Si-C-Verbundpartikel, Siliciumoxid, Siliciummonoxid (SiO), Siliciumdioxid ($SiO_2$), Zinnoxid (SnO), Zinndioxid ($SnO_2$), Zinnpartikel, Lithiumtitanat und Gemische davon umfasst.

3. Slurry (1) nach Anspruch 1 oder 2, wobei das wenigstens eine leitfähige Material (5) Industrieruß, Acetylenruß, Ketjen-Ruß, Kohlenstofffasern, Kohlenstoffnanoröhren, aktivierten Kohlenstoff, Graphen, Petrolkoks und Gemische davon umfasst.

4. Slurry (1) nach Anspruch 1 oder 3, wobei die wenigstens eine alkaliquellbare Emulsion (6) ein Emulsions- oder Suspensionscopolymerisat aus wenigstens einem nichtionischen Monomer (6a), das wenigstens ein (Meth)acrylat-Monomer und optional Acrylnitril umfasst, wobei das (Meth)acrylat-Monomer ein $C_1$- bis $C_4$-Alkyl (meth) acrylat-Monomer ist, wenigstens einer olefinisch ungesättigten Carbonsäure oder einem olefinisch ungesättigten Carbonsäuresalz (6b) und

- wenigstens einem olefinisch ungesättigten Vernetzungsmonomer (6c) und/oder
- wenigstens einem funktionellen Monomer (6d), das aus der Gruppe von (Meth)acrylaten und Derivaten davon ausgewählt ist und eine amin-, amid-, nitril-, hydroxy-, glycidyl-, sulfonyl-, ethoxy- und/oder phosphorhaltige Gruppe umfasst, und Derivaten davon

ist.

5. Slurry (1) nach Anspruch 1 oder 4, wobei die wenigstens eine alkaliquellbare Emulsion (6) ein Emulsions- oder Suspensionscopolymerisat-basiertes Copolymer ist, und zwar aus

a) 30 bis 79 Gew.-% wenigstens eines nichtionischen Monomers (6a), das aus der Gruppe von $C_1$- bis $C_4$-Alkyl(meth)acrylat-Estern, wie etwa Methyl(meth)acrylat, Ethyl(meth)acrylat und Butyl(meth)acrylat; Styrol, Butadien, Ethylen, Propylen, Vinylacetat, Vinylpropionat und Acrylnitril ausgewählt ist;

b) 21 bis 60 Gew.-% wenigstens einer olefinisch ungesättigten Carbonsäure oder eines olefinisch ungesättigten Carbonsäuresalzes (6b), die/das vorzugsweise aus der Gruppe von Acrylsäure, Methacrylsäure, Maleinsäure, Itaconsäure, Fumarsäure und deren Salzen ausgewählt ist;

c) 0 bis 10 Gew.-% wenigstens eines olefinisch ungesättigten Vernetzungsmonomers (6c), das vorzugsweise aus der Gruppe von Di- oder Tri(meth)acrylat, Allyl(meth)acrylat, Polyalkylenglykoldi(meth)acrylat, N-methylolacrylamid, Divinylbenzol, 1,6-Hexandioldi(meth)acrylat, Trimethylolpropandiallylether, Tetraallylpentaerythritol, Triallylpentaerythritol, Diallylpentaerythritol, Diallylphthalat, Triallylcyanurat, Bisphenol A, Diallylether, Methylenbisacrylamid, Allylsucrose und Gemischen davon ausgewählt ist;

d) 0 bis 20 Gew.-% wenigstens eines funktionellen Monomers (6d), wobei das funktionelle Monomer (6d) vorzugsweise aus der Gruppe von (Meth)acrylaten und Derivaten davon, die eine amin-, amid-, nitril-, hydroxy-, glycidyl-, sulfonyl-, ethoxy- und/oder phosphorhaltige Gruppe umfassen, und Derivaten davon ausgewählt ist, wobei das funktionelle Monomer (6d) insbesondere aus der Gruppe bestehend aus Acrylamid, Hydroxyalkyl(meth)acrylat, Aminoalkyl(meth)acrylat, Alkyl- und Dialkylaminoalkyl(meth)acrylat, Hydroxyalkyl(meth)acrylamid, Aminoalkyl(meth)acrylamid, Alkyl- und Dialkylaminoalkyl(meth)acrylamid und Glycidyl(meth)acrylat ausgewählt ist, wobei das funktionelle Monomer (6d) kein(e) olefinisch ungesättigte Carbonsäure oder olefinisch ungesättigtes Carbonsäuresalz (6b) ist;

wobei die Gew.-% der Monomere 6a, 6b, 6c und 6d auf der Summe aller copolymerisierten Monomere basieren und wobei die alkaliquellbare Emulsion (6) - basierend auf der Gesamtmenge der zugegebenen Monomere - weniger als 0,2 Gew.-%, insbesondere weniger als 0.1 Gew.-% an $C_5$- bis $C_{40}$-Alkyl(meth)acrylat umfasst und somit nicht hydrophobisch modifiziert ist.

6. Slurry (1) nach Anspruch 5, wobei die Monomere 6a, 6b, 6c und 6d so ausgewählt sind, dass im Ergebnis eine Glasübergangstemperatur $T_g$ der alkaliquellbaren Emulsion (6) bei einem pH-Wert von 5 zwischen -20 °C und +120 °C, vorzugsweise zwischen 0 °C und +100 °C, insbesondere zwischen +20 °C und +90 °C, gemessen gemäß ISO 11357-1:2016 mit einer Erwärmungsgeschwindigkeit von 10 °C/min DSC (Mittelpunkt), erhalten wird.

7. Slurry (1) nach einem der Ansprüche 1 bis 6, wobei das optionale Latex-Bindemittel (7)

i) auf Monomeren basiert, die aus der Gruppe von aromatischen Vinylmonomeren, wie etwa Styrol; konjugierten Dienmonomeren, wie etwa Butadien und Isopren; Alkenen, wie etwa Ethylen und Propylen; ethylenisch ungesättigten Carbonsäuren, wie etwa (Meth)acrylsäure, Itaconsäure und Fumarsäure, und deren Salzen; $C_1$- bis $C_{20}$-Alkylestern von (Meth)acrylsäure; Acrylamid und Derivaten davon; Acrylnitril; Acrylnitril- und Vinylestern von $C_1$- bis $C_{20}$-Carbonsäuren, wie etwa Vinylacetat, Vinylpropionat, Vinylversatat und Vinylstearat; Vinylchlorid; und Gemischen davon ausgewählt sind; und/oder

ii) auf einem Polymer oder Copolymer von StyrolButadien (SB), $C_1$- bis $C_{20}$-Alkyl (meth) acrylat, Styrol(meth) acrylat, Ethylenvinylacetat (EVA), vorzugsweise mit einem Ethylengehalt zwischen 5 Gew.-% und 85 Gew.-% und einem Vinylacetatgehalt zwischen 95 und 15 Gew.-%, Ethylen-Propylen-Dien-Gemisch (EPDM), Vinylacetat-Vinylversatat (VA/VeoVa), Vinylacetat-Vinylversatat-(Meth)acrylat (VA/VeoVa/Ac), Ethylen-Vinylchlorid (E/VC) und/oder Vinylacetat-Ethylen-Vinylchlorid (VA/E/VC) und Gemischen davon basiert; und/oder

iii) eine Glasübergangstemperatur $T_g$ zwischen -40 °C und +90 °C, vorzugsweise zwischen -30 °C und +50 °C, aufweist, wobei die Glasübergangstemperatur $T_g$ der Copolymere gemäß der Fox-Gleichung berechnet wird.

8. Slurry (1) nach einem der Ansprüche 1 bis 7, wobei die Slurry (1) Folgendes umfasst:

i) 0,1 bis 5 Gew.-%, vorzugsweise 1 bis 4 Gew.-%, wenigstens einer alkaliquellbaren Emulsion (6) mit einer Glasübergangstemperatur $T_g$ zwischen -20 °C und +90 °C, vorzugsweise zwischen - 10 °C und +40 °C, und 0 bis 0,4 Gew.-%, vorzugsweise 0 Gew.-%, Latex-Bindemittel (7); oder

ii) 0,1 bis 5 Gew.-%, vorzugsweise 0,2 bis 4 Gew.-%, wenigstens einer alkaliquellbaren Emulsion (6) mit einer Glasübergangstemperatur $T_g$ zwischen -20 °C und +120 °C, vorzugsweise zwischen - 10 °C und +100 °C, und 0,5

EP 4 483 428 B1

bis 5 Gew.-%, vorzugsweise 1 bis 4 Gew.-%, Latex-Bindemittel (7);

wobei die Glasübergangstemperatur $T_g$ gemäß ISO 11357-1:2016 mit einer Erwärmungsgeschwindigkeit von 10 °C/min DSC (Mittelpunkt) gemessen wird.

9. Anode (10) für die Li-Ionen-Sekundärbatterie (3), wobei die Anode (10) eine Anodenaktivmaterialschicht (1*) umfasst, die auf den Anodenstromableiter (2) aufgebracht ist, wobei es sich bei der Anodenaktivmaterialschicht (1*) um der Anodenaktivmaterialslurry (1) nach wenigstens einem der Ansprüche 1 bis 8, der auf den Anodenstromableiter (2) aufgebracht und getrocknet ist, handelt.

10. Anode (10) nach Anspruch 9, **dadurch gekennzeichnet, dass** der Anodenstromableiter (2) auf Kupferfolie basiert.

11. Anode (10) nach Anspruch 9 oder 10, **dadurch gekennzeichnet, dass**

i) die Anodenaktivmaterialschicht (1*) eine Dicke zwischen 5 um und 5 mm, vorzugsweise zwischen 0,01 mm und 2 mm, und/oder eine Dichte nach Kalandern zwischen 1 g/cm$^3$ und 2 g/cm$^3$, vorzugsweise zwischen 1,2 g/cm$^3$ und 1,9 g/cm$^3$, aufweist; und/oder
ii) der Anodenstromableiter (2) eine Dicke zwischen 1 um und 1 mm, vorzugsweise zwischen 2 um und 0,2 mm, aufweist;

wobei die Dicke der Anodenaktivmaterialschicht (1*) und des Anodenstromableiters (2) nach Kalandern gemäß ISO 2808:2019 bestimmt wird und die Dichte der Anodenaktivmaterialschicht (1*) durch Dividieren des Gewichts der aufgebrachten Anodenaktivmaterialschicht (1*) durch ihr Volumen, bestimmt durch Multiplizieren ihrer Dicke, gemessen gemäß DIN 862 / Formular A1 unter Verwendung eines Mikrometers, mit der bedeckten Fläche, bestimmt wird.

12. Verfahren zur Herstellung der Anode (10) nach einem der Ansprüche 9 bis 11 für die Li-Ionen-Sekundärbatterie (3) durch Beschichten des Anodenstromableiters (2) mit der Anodenaktivmaterialslurry (1) nach einem der Ansprüche 1 bis 8, **dadurch gekennzeichnet, dass**

a) das wenigstens eine Anodenaktivmaterial (4), das optionale wenigstens eine leitfähige Material, die wenigstens eine alkaliquellbare Emulsion (6), das optionale wenigstens eine Latex-Bindemittel (7) und die optionale wenigstens eine weitere Komponente (8) gemischt werden, optional nach Zugabe von Lösemittel (9), um der Anodenaktivmaterialslurry (1) zu erhalten;
b) optional Einstellen des pH-Werts, der Feststoffe und/oder der Viskosität der Slulrry (1) durch Zugeben einer Base, einer Säure, eines oder mehrerer Lösemittel (9) und/oder eines Verdickungsmittels, wobei das Verdickungsmittel von der wenigstens einen alkaliquellbaren Emulsion (6) verschieden ist;
c) Aufbringen der im Ergebnis erhaltenen Anodenaktivmaterialslurry (1) auf eine oder beide Seiten des Anodenstromableiters (2);
d) Vornehmen eines ersten Trocknungsschritts bezüglich der aufgebrachten Anodenaktivmaterialslurry (1), um im Ergebnis die Anodenaktivmaterialschicht (1*), die auf den Anodenstromableiter (2) aufgebracht ist, zu erhalten;
e) optional Vornehmen wenigstens eines weiteren Trocknungsschritts bezüglich der Anodenaktivmaterialschicht (1*), die auf den Anodenstromableiter (2) aufgebracht ist; und
f) wobei die Anodenaktivmaterialschicht (1*), die auf den Anodenstromableiter (2) aufgebracht ist, nach dem abschließenden Trocknungsschritt optional kalandert wird, um im Ergebnis eine Dichte der Anodenaktivmaterialschicht (1*) zwischen 1 g/cm$^3$ und 2 g/cm$^3$, bestimmt durch Dividieren des Gewichts der aufgebrachten Anodenaktivmaterialschicht (1*) durch ihr Volumen, bestimmt durch Multiplizieren ihrer Dicke, gemessen gemäß DIN 862 / Formular A1 unter Verwendung eines Mikrometers, mit der bedeckten Fläche, zu erhalten.

13. Verfahren nach Anspruch 12, **dadurch gekennzeichnet, dass** die Anodenaktivmaterialslurry (1) auf Folgendes eingestellt wird:

- einen pH-Wert zwischen 4 und 10, insbesondere einen pH-Wert zwischen 5 und 9;
- eine Brookfield-Viskosität zwischen 500 mPa.s und 10.000 mPa.s, vorzugsweise zwischen 2.000 mPa.s und 7.000 mPa.s, gemessen bei 15 rpm und 23 °C gemäß ISO 2555:2018 unter Verwendung einer Scheibenspindel; und/oder
- einen Feststoffgehalt von 30 bis 70 Gew.-%, vorzugsweise 40 bis 60 Gew.-%, basierend auf der Gesamtmenge der Anodenaktivmaterialslurry (1) und gemessen gemäß ASTM D3926-05(2019).

14. Verfahren nach Anspruch 12 oder 13, **dadurch gekennzeichnet, dass**

- die Anodenaktivmaterialslurry (1) auf eine oder beide Seiten des Anodenstromableiters (2) mit einem Beschichtungsgewicht pro Seite von etwa 30 g/m$^2$ bis etwa 150 g/m$^2$, vorzugsweise etwa 60 g/m$^2$ bis etwa 120 g/m$^2$, basierend auf der getrockneten Slurry (1), aufgebracht wird, um die Anode zu erhalten, wobei die Anodenaktivmaterialslurry (1) vorzugsweise mittels eines Schlitzgießverfahrens, Rakel, Comma Bar, Gegenwalze oder Tensioned Web aufgebracht wird; und/oder
- die Anodenaktivmaterialschicht (1*), die auf den Anodenstromableiter (2) aufgebracht ist, in wenigstens einem weiteren Trocknungsschritt bei zwischen 40 °C und 350 °C, vorzugsweise zwischen 60 °C und 250 °C, und vorzugsweise bei Umgebungsdruck getrocknet wird.

15. Verwendung der Anodenaktivmaterialslurry (1) nach einem der Ansprüche 1 bis 8 zum Beschichten des Anodenstromableiters (2), um die Anode (10) für Li-Ionen-Batterien (3) gemäß dem Verfahren nach einem der Ansprüche 12 bis 14 zu erhalten.

## Revendications

1. Suspension de matériau actif d'anode (1) destinée au revêtement d'un collecteur de courant d'anode (2) pour une batterie lithium-ion secondaire (3), dans laquelle la suspension (1) comprend

i) entre 80 et 98 % en poids d'au moins un matériau actif d'anode (4) ;
ii) entre 0 et 5 % en poids d'au moins un matériau conducteur (5) ;
iii) entre 0,1 et 5 % en poids d'au moins une émulsion alcaline gonflable (6) ;
iv) entre 0 et 5 % en poids d'au moins un liant latex (7) ;
v) entre 0 et 5 % en poids d'au moins un autre composant (8) choisi dans le groupe constitué par les dispersants, les agents de réticulation en phase aqueuse, les charges, les protéines, les polysaccharides et leurs dérivés, et les polymères synthétiques solubles dans l'eau, et
vi) au moins un solvant (9), en particulier de l'eau,
dans laquelle les pourcentages en poids sont basés sur leur teneur en matières solides par rapport à la teneur en matières solides de la suspension totale (1), déterminée conformément à la norme ASTM D3926-05(2019), **caractérisée en ce que** l'au moins une émulsion alcaline gonflable (6) est un copolymérisat en émulsion ou en suspension d'au moins un monomère non ionique (6a) comprenant du butadiène, du styrène ou au moins un monomère (méth)acrylate, et éventuellement de l'acrylonitrile, et au moins un acide carboxylique oléfiniquement insaturé ou un sel d'acide carboxylique oléfiniquement insaturé (6b), dans laquelle le monomère (méth)acrylate est un monomère (méth)acrylate d'alkyle en C$_1$ à C$_4$.

2. Suspension (1) selon la revendication 1, dans laquelle le matériau actif d'anode (4) comprend du graphite, du graphite synthétisé, du carbone graphitisable, en particulier du graphite naturel, du graphite artificiel, du graphite courbé, du charbon actif, du carbone non mou, du carbone dur, des microbilles de mésocarbone (MCMB), des particules de silicium, des particules composites Si-C, de l'oxyde de silicium, du monoxyde de silicium (SiO), du dioxyde de silicium (SiO$_2$), de l'oxyde d'étain (SnO), du dioxyde d'étain (SnO$_2$), des particules d'étain, du titanate de lithium et des mélanges de ceux-ci.

3. Suspension (1) selon la revendication 1 ou la revendication 2, dans laquelle l'au moins un matériau conducteur (5) comprend du noir de carbone, du noir d'acétylène, du noir de ketjen, des fibres de carbone, des nanotubes de carbone, du carbone activé, du graphène, du coke de pétrole et des mélanges de ceux-ci.

4. Suspension (1) selon la revendication 1 ou la revendication 3, dans laquelle l'au moins une émulsion alcaline gonflable (6) est un copolymérisat en émulsion ou en suspension d'au moins un monomère non ionique (6a) comprenant au moins un monomère (méth)acrylate et, éventuellement, de l'acrylonitrile, dans laquelle le monomère (méth)acrylate est un monomère (méth) acrylate d'alkyle en C$_1$ à C$_4$, au moins un acide carboxylique oléfiniquement insaturé ou un sel d'acide carboxylique oléfiniquement insaturé (6b). et

- au moins un monomère de réticulation à insaturation oléfinique (6c), et/ou
- au moins un monomère fonctionnel (6d) choisi dans le groupe constitué par les (méth)acrylates et leurs dérivés, et comprenant un groupe amine, amide, nitrile, hydroxyle, glycidyle, sulfonyle, éthoxy et/ou phosphoré, et leurs dérivés.

**5.** Suspension (1) selon la revendication 1 ou la revendication 4, dans laquelle l'au moins une émulsion (6) alcaline gonflable est un copolymère à base d'un copolymérisat en émulsion ou en suspension

a) de 30 à 79 % en poids d'au moins un monomère non ionique (6a) choisi dans le groupe constitué par les esters de (méth)acrylate d'alkyle en $C_1$ à $C_4$ tels que le (méth)acrylate de méthyle, le (méth)acrylate d'éthyle et le (méth)acrylate de butyle ; le styrène, le butadiène, l'éthylène, le propylène, l'acétate de vinyle, le propionate de vinyle, et l'acrylonitrile ;

b) de 21 à 60 % en poids d'au moins un acide carboxylique oléfiniquement insaturé ou d'un sel d'acide carboxylique oléfiniquement insaturé (6b), de préférence choisi dans le groupe constitué par l'acide acrylique, l'acide méthacrylique, l'acide maléique, l'acide itaconique, l'acide fumarique et leurs sels ;

c) 0 à 10 % en poids d'au moins un monomère de réticulation oléfiniquement insaturé (6c), de préférence choisi dans le groupe constitué par le di- ou le tri(méth)acrylate, le (méth)acrylate d'allyle, le di(méth)acrylate de polyalkylène glycol, le N-méthylolacrylamide, le divinylbenzène, le 1,6-hexanediol di(méth)acrylate, l'éther diallylique du triméthylolpropane, le pentaérythritol tétraallylique, le pentaérythritol triallylique, le pentaérythritol diallylique, le phtalate diallylique, le cyanurate triallylique, le bisphénol A, l'éther diallylique, le bisacrylamide de méthylène, le saccharose allylique, et leurs mélanges ;

d) de 0 à 20 % en poids d'au moins un monomère fonctionnel (6d), dans lequel le monomère fonctionnel (6d) est de préférence choisi dans le groupe constitué par les (méth)acrylates et leurs dérivés, comprenant un groupe amine, amide, nitrile, hydroxyle, glycidyle, sulfonyle, éthoxy et/ou phosphoré, et leurs dérivés, dans laquelle le monomère fonctionnel (6d) est en particulier choisi dans le groupe constitué par l'acrylamide, l'hydroxy(méth)acrylate d'alkyle, l'amino(méth)acrylate d'alkyle, l'amino(méth)acrylate d'alkyle et de di-alkyle, l'hydroxy(méth)acrylamide d'alkyle, l'amino(méth)acrylamide d'alkyle, l'amino(méth)acrylamide d'alkyle et de di-alkyle, et le glycidyl(méth)acrylate, dans lequel le monomère fonctionnel (6d) n'est pas un acide carboxylique oléfiniquement insaturé ou un sel d'acide carboxylique oléfiniquement insaturé (6b) ;

dans laquelle le pourcentage en poids des monomères 6a, 6b, 6c et 6d est basé sur la somme de tous les monomères copolymérisés, et dans laquelle l'émulsion alcaline gonflable (6) comprend moins de 0,2 % en poids, en particulier moins de 0,1 % en poids, sur la base de la quantité totale des monomères ajoutés, de (méth)acrylate d'alkyle en $C_5$ à $C_{40}$, et n'est donc pas modifiée sur le plan hydrophobique.

**6.** Suspension (1) selon la revendication 5, dans laquelle les monomères 6a, 6b, 6c et 6d sont choisis pour conduire à une température de transition vitreuse $T_g$ de l'émulsion alcaline gonflable (6) lorsqu'elle a un pH de 5, comprise entre -20 °C et +120 °C, de préférence comprise entre 0 °C et +100 °C, en particulier comprise entre +20 °C et +90 °C, mesurée selon la norme ISO 11357-1:2016 avec une vitesse de chauffe de 10 °C/min DSC (point milieu).

**7.** Suspension (1) selon l'une quelconque des revendications 1 à 6, dans laquelle le liant latex optionnel (7)

i) est à base de monomères choisis dans le groupe constitué par les monomères vinyliques aromatiques, tels que le styrène ; les monomères diènes conjugués, tels que le butadiène et l'isoprène ; les alcènes, tels que l'éthylène et le propylène ; les acides carboxyliques éthyléniquement insaturés, tels que l'acide (méth)acrylique, l'acide itaconique et l'acide fumarique, ainsi que leurs sels ; les esters alkyles en $C_1$ à $C_{20}$ de l'acide (méth)acrylique ; l'acrylamide et ses dérivés ; l'acrylonitrile ; l'acrylonitrile et les esters vinyliques des acides carboxyliques en $C_1$ à $C_{20}$, tels que l'acétate de vinyle, le propionate de vinyle, le versatate de vinyle et le stéarate de vinyle ; le chlorure de vinyle ; et les mélanges de ceux-ci ; et/ou

ii) est à base d'un polymère ou d'un copolymère de styrène et de butadiène (SB), de (méth)acrylate d'alkyle en $C_1$ à $C_{20}$, de styrène (méth)acrylate, d'éthylène et d'acétate de vinyle (EVA) avec, de préférence, une teneur en éthylène comprise entre 5 et 85 % en poids et une teneur en acétate de vinyle comprise entre 95 et 15 % en poids, d'un mélange d'éthylène-propylène-diène (EPDM), d'acétate de vinyle-versatate de vinyle (VA/VeoVa), d'acétate de vinyle-versatate de vinyle-(méth)acrylate (VA/VeoVa/Ac), de chlorure d'éthylène-vinyle (ENC), et/ou d'acétate de vinyle-chlorure d'éthylène-vinyle (VA/ENC), et des mélanges de ceux-ci ; et/ou

iii) a une température de transition vitreuse $T_g$ comprise entre -40 °C et +90 °C, de préférence comprise entre -30 °C et +50 °C, dans laquelle la température de transition vitreuse $T_g$ des copolymères est calculée selon l'équation de Fox.

**8.** Suspension (1) selon l'une quelconque des revendications 1 à 7, dans laquelle la suspension (1) comprend

i) de 0,1 à 5 % en poids, de préférence de 1 à 4 % en poids, d'au moins une émulsion alcaline gonflante (6) ayant une température de transition vitreuse $T_g$ comprise entre -20 °C et +90 °C, de préférence comprise entre -10 °C et +40 °C, et de 0 à 0,4 % en poids, de préférence 0 % en poids, d'un liant latex (7) ; ou

ii) de 0,1 à 5 % en poids, de préférence de 0,2 à 4 % en poids, d'au moins une émulsion alcaline gonflable (6) ayant une température de transition vitreuse $T_g$ comprise entre -20 °C et +120 °C, de préférence comprise entre -10 °C et +100 °C, et de 0,5 à 5 % en poids, de préférence de 1 à 4 % en poids, d'un liant latex (7) ;

dans laquelle la température de transition vitreuse $T_g$ est mesurée conformément à la norme ISO 11357-1:2016 avec une vitesse de chauffage de 10 °C/min DSC (point médian).

9.  Anode (10) pour la batterie lithium-ion secondaire (3), dans laquelle l'anode (10) comprend une couche de matériau actif d'anode (1*) revêtue sur le collecteur de courant d'anode (2), dans laquelle la couche de matériau actif d'anode (1*) est la suspension de matériau actif d'anode (1) selon au moins l'une quelconque des revendications 1 à 8 lorsqu'elle est appliquée sur le collecteur de courant d'anode (2) et séchée.

10. Anode (10) selon la revendication 9, **caractérisée en ce que** le collecteur de courant anodique (2) est à base d'une feuille de cuivre.

11. Anode (10) selon la revendication 9 ou la revendication 10, **caractérisée en ce que**

i) la couche de matériau actif d'anode (1*) a une épaisseur comprise entre 5 um et 5 mm, de préférence comprise entre 0,01 mm et 2 mm, et/ou une densité après calandrage comprise entre 1 g/cm$^3$ et 2 g/cm$^3$, de préférence comprise entre 1,2 g/cm$^3$ et 1,9 g/cm$^3$ ; et/ou

ii) le collecteur de courant anodique (2) a une épaisseur comprise entre 1 um et 1 mm, de préférence comprise entre 2 um et 0,2 mm ;

dans laquelle l'épaisseur de la couche de matériau actif d'anode (1*) et du collecteur de courant d'anode (2) est déterminée après calandrage conformément à la norme ISO 2808:2019 et la densité de la couche de matériau actif d'anode (1*) est déterminée en divisant le poids de la couche de matériau actif d'anode revêtue (1*) par son volume, déterminé en multipliant son épaisseur, mesurée conformément à la norme DIN 862 / Forme A1 à l'aide d'un micromètre, par la surface couverte.

12. Procédé de fabrication de l'anode (10) selon l'une quelconque des revendications 9 à 11 pour la batterie lithium-ion secondaire (3) par revêtement du collecteur de courant d'anode (2) avec la suspension de matériau actif d'anode (1) selon l'une quelconque des revendications 1 à 8, **caractérisé en ce que**

a) au moins un matériau actif d'anode (4), éventuellement au moins un matériau conducteur, l'au moins une émulsion alcaline gonflable (6), éventuellement l'au moins un liant latex (7) et éventuellement l'au moins un autre composant (8) sont mélangés, éventuellement après ajout d'un solvant (9), pour obtenir la suspension de matériau actif d'anode (1) ;

b) le réglage éventuel du pH, des matières solides et/ou de la viscosité de la suspension (1) par l'ajout d'une base, d'un acide, d'un ou de plusieurs solvants (9) et/ou d'un agent épaississant dans lequel l'agent épaississant est différent de l'au moins une émulsion alcaline gonflante (6) ;

c) l'application de la suspension de matière active anodique (1) résultante sur un ou les deux côtés du collecteur de courant anodique (2) ;

d) la soumission de la suspension de matériau actif d'anode appliquée (1) à une première étape de séchage pour obtenir la couche de matériau actif d'anode (1*) revêtue sur le collecteur de courant d'anode (2) ;

e) éventuellement, la soumission de la couche de matériau actif d'anode (1*) revêtue sur le collecteur de courant d'anode (2) à au moins une autre étape de séchage ; et

f) dans laquelle la couche de matériau actif d'anode (1*) revêtue sur le collecteur de courant d'anode (2) est éventuellement calandrée après l'étape de séchage final, pour obtenir une densité de la couche de matériau actif d'anode (1*) comprise entre 1 g/cm$^3$ et 2 g/cm$^3$, déterminée en divisant le poids de la couche de matériau actif d'anode revêtue (1*) par son volume, déterminé en multipliant son épaisseur, mesurée conformément à la norme DIN 862 / Forme A1 à l'aide d'un micromètre, par la surface couverte.

13. Procédé selon la revendication 12, **caractérisé en ce que** la suspension de matériau actif d'anode (1) est ajustée à

- un pH compris entre 4 et 10, en particulier un pH compris entre 5 et 9 ;

- une viscosité Brookfield comprise entre 500 mPa.s et 10 000 mPa.s, de préférence comprise entre 2 000 mPa.s et 7 000 mPa.s, mesurée à 15 tr/min et 23 °C selon la norme ISO 2555:2018, à l'aide d'une broche à disque ; et/ou
- une teneur en matières solides comprise entre 30 et 70 % en poids, de préférence comprise entre 40 et 60 % en poids, sur la base de la quantité totale de suspension de matériau actif d'anode (1), et mesurée conformément à la norme ASTM D3926-05(2019) .

14. Procédé selon la revendication 12 ou la revendication 13, **caractérisé en ce que**

- la suspension de matériau actif d'anode (1) est appliquée sur l'une ou les deux faces du collecteur de courant d'anode (2) avec un poids de couche par face compris entre environ 30 g/m$^2$ et environ 150 g/m$^2$, de préférence compris entre environ 60 g/m$^2$ et environ 120 g/m$^2$, sur la base de la suspension séchée (1), pour obtenir l'anode, dans lequel la suspension de matériau actif d'anode (1) est appliquée de préférence au moyen d'une racle de coulée à fente, d'une barre à virgule, d'un rouleau d'appui ou d'une bande tendue ; et/ou
- la couche de matériau actif d'anode (1*) revêtue sur le collecteur de courant d'anode (2) est séchée au cours d'au moins une étape de séchage supplémentaire à une température comprise entre 40 °C et 350 °C, de préférence comprise entre 60 °C et 250 °C, et de préférence à pression ambiante.

15. Utilisation de la suspension de matériau actif d'anode (1) selon l'une quelconque des revendications 1 à 8, destinée au revêtement du collecteur de courant d'anode (2) pour obtenir l'anode (10) pour batteries lithium-ion (3) conformément au procédé selon l'une quelconque des revendications 12 à 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210151760 A
- US 20210384512 A
- KR 20220054212 A
- EP 093206 B

**Non-patent literature cited in the description**

- Polymer Data Handbook. Oxford University Press, Inc., 1999